(19) **Europäisches Patentamt / European Patent Office / Office européen des brevets**

(11) **EP 4 492 900 A1**

(12) **EUROPEAN PATENT APPLICATION**
published in accordance with Art. 153(4) EPC

(43) Date of publication:
**15.01.2025 Bulletin 2025/03**

(21) Application number: **23778370.9**

(22) Date of filing: **30.03.2023**

(51) International Patent Classification (IPC):
***H04W 72/12*** (2023.01)

(52) Cooperative Patent Classification (CPC):
**H04W 72/12**

(86) International application number:
**PCT/CN2023/085053**

(87) International publication number:
**WO 2023/186005 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 CN 202210342432**
**11.08.2022 CN 202210964130**

(71) Applicant: **Huawei Technologies Co., Ltd.**
**Shenzhen, Guangdong 518129 (CN)**

(72) Inventors:
• **HUANG, Xiuxuan**
**Shenzhen, Guangdong 518129 (CN)**
• **LI, Xinxian**
**Shenzhen, Guangdong 518129 (CN)**
• **DING, Mengying**
**Shenzhen, Guangdong 518129 (CN)**
• **PENG, Jinlin**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **COMMUNICATION METHOD AND APPARATUS**

(57) A communication method and apparatus are provided. The method includes: A base station sends, to a terminal, first DCI for scheduling a plurality of CCs, where the first DCI includes at least a first field, and the first field is shared by the plurality of CCs. According to the method and the apparatus in this application, information does not need to be independently configured for each CC in the first field in the first DCI, so that payload overheads of the first DCI are reduced.

```
┌─────────────┐                          ┌─────────────┐
│ Base station │                          │     UE      │
└─────────────┘                          └─────────────┘
       │                                        │
       │  501: First DCI, where the first DCI is for   │
       │  scheduling transmission on a plurality of CCs │
       │──────────────────────────────────────▶│
       │                                        │
                                    ┌ ─ ─ ─ ─ ─ ─ ─ ─ ─ ┐
                                      502: Receive PDSCHs or
                                    │  send PUSCHs on the  │
                                       plurality of CCs based on
                                    │ scheduling of the first DCI │
                                    └ ─ ─ ─ ─ ─ ─ ─ ─ ─ ┘
```

FIG. 5

EP 4 492 900 A1

**Description**

**CROSS-REFERENCE TO RELATED APPLICATIONS**

This application claims priorities to Chinese Patent Application No. 202210342432.5, filed with the China National Intellectual Property Administration on March 31, 2022 and entitled "COMMUNICATION METHOD AND APPARATUS", and to Chinese Patent Application No. 202210964130.1, filed with the China National Intellectual Property Administration on August 11, 2022 and entitled "COMMUNICATION METHOD AND APPARATUS", both of which are incorporated herein by reference in their entireties.

**TECHNICAL FIELD**

Embodiments of this application relate to the field of communication technologies, and in particular, to a communication method and apparatus.

**BACKGROUND**

Carrier aggregation (carrier aggregation, CA) is a technology in which two or more component carriers (component carriers, CCs) are aggregated to support a larger transmission bandwidth. Each CC corresponds to one independent cell. Usually, one CC may be equivalent to one cell. To efficiently use scattered spectrums, the CA supports aggregation of different CCs, for example, aggregation of CCs in a same bandwidth or different bandwidths; aggregation of adjacent or non-adjacent CCs in a same frequency band; and aggregation of CCs in different frequency bands. How to design downlink control information (downlink control information, DCI) to schedule data transmission in a plurality of CCs by using the DCI, and implement carrier aggregation of different CCs is a problem worth studying.

**SUMMARY**

This application provides a communication method and apparatus, to schedule data transmission in a plurality of CCs by using first DCI, and implement carrier aggregation of the plurality of CCs.

According to a first aspect, a communication method is provided. The method is performed by a network device, a component (a processor, a chip, or the like) disposed in the network device, or the like. The method includes: sending first downlink control information DCI to a terminal.

The first DCI is for scheduling transmission of a plurality of component carriers CCs, the first DCI includes a first field, and information carried in the first field is shared by the plurality of CCs. When information k0 carried in the first field is configured to be shared by the plurality of CCs, k0 indicates an offset value between a first reference location and a time unit corresponding to a physical downlink shared channel PDSCH, and the first reference location is determined based on a time unit corresponding to the first DCI.

In the foregoing method, when the plurality of CCs are scheduled by using the first DCI, the first DCI includes at least the first field. The first field is shared by the plurality of CCs, and independent information does not need to be configured for each CC in the first field, so that payload overheads of the first DCI are reduced. In the foregoing design, the first field may include a time domain resource assignment field. When information k0 carried in the time domain resource assignment field is configured to be shared by the plurality of CCs, a design of k0 is described in detail, so that one value of k0 can indicate time units corresponding to PDSCHs in the plurality of CCs, to reduce the payload overheads of the first DCI.

In a design, the first DCI further includes a second field, and information carried in the second field is independently configured for each of the plurality of CCs.

In a design, the method further includes: determining, based on a configuration state of a field in the first DCI, corresponding information carried in the field in the first DCI. Configuration states of the field in the first DCI include: common, flexible, and independent. For one field in the first DCI, when a configuration state of the field is common, information carried in the field is shared by the plurality of CCs scheduled by using the first DCI; or when a configuration state of the field is flexible, information carried in the field is shared by the plurality of CCs scheduled by using the first DCI, or information carried in the field includes information independently configured for each CC; or when a configuration state of the field is independent, information carried in the field includes information independently configured for each CC.

In the foregoing design, a field configuration state of each field in the first DCI may be specified in a protocol or preset. When a configuration state of one field is common, information carried in the field may be shared by the plurality of CCs. Alternatively, when a configuration state of one field is independent, information carried in the field is independently configured for each CC. Alternatively, when a configuration state of one field is flexible, information carried in the field may be shared by the plurality of CCs, or may be independently configured for each CC. In the foregoing method, a base station may determine, based on a field configuration state specified in a protocol, whether each field in the first DCI is common or independent. This is easy to be implemented by the base station.

In a design, a field whose configuration state is common includes at least one of the following: an identifier for DCI formats, a carrier indicator, a downlink assignment index, a transmission power control TPC command for scheduled physical uplink control channel PUCCH, a PUCCH resource indicator, a transmission configuration indicator, or cyclic redundancy check CRC.

In a design, when information k1 carried in the first field is configured to be shared by the plurality of CCs, k1 indicates an offset value between a second reference location and a time unit corresponding to a HARQ, and the second reference location is determined based on a time unit corresponding to a PDSCH in at least one of the plurality of CCs.

In the foregoing method, the first field includes a PDSCH-to-HARQ feedback timing indicator field. When information k1 carried in the PDSCH-to-HARQ feedback timing indicator field may be shared by the plurality of CCs, a value of k1 may be carried, to indicate time units for sending HARQs on the plurality of CCs, and reduce the payload overheads of the first DCI.

In a design, the plurality of CCs scheduled by using the first DCI include at least a first CC and a second CC. The first DCI is sent to the terminal on the first CC. The method further includes: sending second DCI to the terminal on the first CC. The first DCI is DCI that supports multi-carrier co-scheduling, and the second DCI is DCI that supports single-carrier scheduling.

In the foregoing method, in addition to the first DCI, the second DCI may be further sent on the first CC. The first DCI may be the DCI that supports multi-carrier scheduling. For example, the first DCI may be single DCI. The second DCI may be the DCI that supports single-carrier scheduling. For example, the second DCI is single DCI or legacy DCI.

In a design, when a subcarrier spacing SCS of the first CC is less than an SCS of the second CC, the first DCI and the second DCI are sent in a same time unit.

In a design, when an SCS of the first CC is greater than an SCS of the second CC, the first DCI is sent by using N time units as a periodicity, the second DCI is sent in time units between different periodicities of the first DCI, and a value of N is determined based on the SCS of the first CC and the SCS of the second CC.

In a design, when a plurality of data transmissions are scheduled on one CC by using the first DCI, information carried in any one of the following fields included in the first DCI is shared by the plurality of data transmissions on the CC: frequency domain resource assignment, a modulation and coding scheme MCS of a transport block TB, a new data indicator of a TB, or a redundancy version RV of a TB.

In the foregoing method, a plurality of data transmissions may be scheduled on a same CC by using the first DCI, and the data transmission may be carried on a PDSCH or a PUSCH. This is not limited. In this solution, based on a further design, a field in DCI may be further shared for a plurality of data transmissions on a same CC, so that the payload overheads of the first DCI are reduced.

In a design, when there are a group of offset values k0, the group of offset values k0 include a plurality of offset values k0, the group of offset values k0 are shared by the plurality of CCs scheduled by using the first DCI, and the plurality of offset values k0 included in the group of offset values k0 are independently configured for a plurality of data transmissions scheduled on one CC by using the first DCI.

According to a second aspect, a communication method is provided. The method is performed by a terminal or a component (a processor, a chip, or the like) disposed in the terminal. The method includes: receiving first downlink control information DCI from a network device.

The first DCI is for scheduling transmission of a plurality of component carriers CCs, the first DCI includes a first field, and information carried in the first field is shared by the plurality of CCs. When information k0 carried in the first field is configured to be shared by the plurality of CCs, k0 indicates an offset value between a first reference location and a time unit corresponding to a physical downlink shared channel PDSCH, and the first reference location is determined based on a time unit corresponding to the first DCI.

In the foregoing method, data transmission on a plurality of CCs may be scheduled by using the first DCI. In addition, the first field in the DCI may be designed to be shared by the plurality of CCs, and corresponding information does not need to be independently configured for each CC, so that payload overheads of the first DCI are reduced.

In a design, the first DCI further includes a second field, and information carried in the second field is independently configured for each of the plurality of CCs.

In a design, configuration states of a field in the first DCI include: common, flexible, and independent, and at least one of the first field and the second field is determined based on a configuration state that is of a field in the first DCI and that is specified in a protocol.

In a design, a field whose configuration state is common includes at least one of the following: an identifier for DCI formats, a carrier indicator, a downlink assignment index, a transmission power control TPC command for scheduled physical uplink control channel PUCCH, a PUCCH resource indicator, a transmission configuration indicator, or cyclic redundancy check CRC.

In a design, the plurality of CCs scheduled by using the first DCI include a first CC and a second CC, a subcarrier spacing SCS of the first CC is less than an SCS of the second CC, the first reference location is a time unit corresponding to first DCI on the second CC, k0 indicates an offset value between the time unit corresponding to the first DCI on the second CC and a time unit corresponding to a PDSCH, and the method further includes: determining, based on the SCS of the first CC, the SCS of the second CC, and k0, an offset value between the time unit corresponding to the first DCI and the time unit corresponding to the PDSCH on the first CC.

In a design, the determining, based on the SCS of the first CC, the SCS of the second CC, and k0, an offset value between the time unit corresponding to the first DCI on the first CC and the time unit corresponding to the PDSCH satisfies the following condition:

$$\mathrm{floor}(k0/(2^{\mu_1-\mu_2})),$$

where

floor represents a round-down operation, k0 represents the offset value between the time unit corresponding to the first DCI on the second CC and the time unit corresponding to the PDSCH, $\mu_1$ represents an index of the SCS corresponding to the second CC, and $\mu_2$ represents an index of the SCS corresponding to the first CC.

In a design, the plurality of CCs scheduled by using the first DCI include a first CC and a second CC, an SCS of the first CC is less than an SCS of the second CC, the first reference location is an offset value between the time unit corresponding to the first DCI and the time unit corresponding to the PDSCH on the first CC, k0 indicates an offset value between the time unit corresponding to the first DCI and the time unit corresponding to the PDSCH on the first CC, and the method further includes:

determining, based on the time unit corresponding to the PDSCH on the first CC, the time unit corresponding to the PDSCH on the second CC; or receiving indication information from the network device, where the indication information indicates an offset value between a time unit corresponding to first DCI on the second CC and the time unit corresponding to the PDSCH; or determining, based on a third field in the first DCI, a time unit corresponding to a PDSCH on the second CC, where the third field indicates an offset value between the time unit corresponding to the PDSCH on the first CC and the time unit corresponding to the PDSCH on the second CC.

In a design, when information k1 carried in the first field is configured to be shared by the plurality of CCs, k1 indicates an offset value between a second reference location and a time unit for transmitting a HARQ, the second reference location is determined based on a time unit corresponding to a PDSCH in one of the plurality of CCs, and the method further includes: determining, based on the second reference location and k1, a time unit corresponding to a HARQ in the plurality of CCs of the first DCI.

In a design, the plurality of CCs scheduled by using the first DCI include at least the first CC and the second CC. The first DCI is received from the network device on the first CC. The method further includes: receiving second DCI from the network device on the first CC. The first DCI is DCI that supports multi-carrier co-scheduling, and the second DCI is DCI that supports single-carrier scheduling.

In a design, when the subcarrier spacing SCS of the first CC is less than the SCS of the second CC, the first DCI and the second DCI are received in a same time unit.

In a design, when the SCS of the first CC is greater than the SCS of the second CC, the first DCI is received by using N time units as a periodicity, the second DCI is received in time units between different periodicities of the first DCI, and a value of N is determined based on the SCS of the first CC and the SCS of the second CC.

In a design, when a plurality of data transmissions are scheduled on one CC by using the first DCI, information carried in any one of the following fields included in the first DCI is shared by the plurality of data transmissions on the CC: frequency domain resource assignment, a modulation and coding scheme MCS of a transport block TB, a new data indicator of a TB, or a redundancy version RV of a TB.

In a design, when there are a group of offset values k0, the group of offset values k0 include a plurality of offset values k0, the group of offset values k0 are shared by the plurality of CCs scheduled by using the first DCI, and the plurality of offset values k0 included in the group of offset values k0 are independently configured on a plurality of data transmissions scheduled on one CC by using the first DCI.

According to a third aspect, a communication apparatus is provided. The apparatus is configured to implement the method in the first aspect, and includes corresponding functional modules or units, which are respectively configured to implement the steps in the method in the first aspect. Functions may be implemented by hardware, or may be implemented by hardware executing corresponding software. The hardware or the software includes one or more modules or units corresponding to the foregoing functions.

According to a fourth aspect, a communication apparatus is provided. The apparatus includes a processor and a memory. The memory is configured to store a computer program or instructions, and the processor is coupled to the memory. When the processor executes the computer program or the instructions, the apparatus is enabled to perform the method in the first aspect.

According to a fifth aspect, a communication apparatus is provided. The apparatus is configured to implement the method in the second aspect, and includes corresponding functional modules or units, which are respectively configured to implement the steps in the method in the second aspect. Functions may be implemented by hardware, or may be implemented by hardware executing corresponding software. The hardware or the software includes one or more modules or units corresponding to the foregoing functions.

According to a sixth aspect, a communication apparatus is provided. The apparatus includes a processor and a memory. The memory is configured to store a computer program or instructions, and the processor is coupled to the memory. When the processor executes the computer program or the instructions, the apparatus is enabled to perform the method in the second aspect.

According to a seventh aspect, a computer-readable storage medium is provided. The computer-readable storage medium stores a computer program or instructions. When the computer program or the instructions are run on a computer, the computer is enabled to perform the method in the first aspect.

According to an eighth aspect, a computer-readable storage medium is provided. The computer-readable storage medium stores a computer program or instructions. When the computer program or the instructions are run on a computer, the computer is enabled to perform the method in the second aspect.

According to a ninth aspect, a computer program product is provided. The computer program product includes a computer program or instructions. When the computer program or the instructions are run on a computer, the computer is enabled to perform the method in the first aspect.

According to a tenth aspect, a computer program product is provided. The computer program product includes a computer program or instructions. When the computer program or the instructions are run on a computer, the computer is enabled to perform the method in the second aspect.

According to an eleventh aspect, a system is provided. The system includes the apparatus in the third aspect or the fourth aspect and the apparatus in the fifth aspect or the sixth aspect.

## BRIEF DESCRIPTION OF DRAWINGS

FIG. 1 is a diagram of a network architecture according to this application;
FIG. 2 is a diagram of self-carrier scheduling according to this application;
FIG. 3 is a diagram of cross-carrier scheduling according to this application;
FIG. 4 is a diagram of single DCI scheduling according to this application;
FIG. 5 is a flowchart of a communication method according to this application;
FIG. 6 is a diagram of k0 according to this application;
FIG. 7 to FIG. 9 are diagrams of calculating k0 when SCSs of different CCs are used;
FIG. 10a is a diagram of k0 in three scheduled carriers when a TDRA field is configured to be common according to this application;
FIG. 10b is a diagram of k1 according to this application;
FIG. 11 to FIG. 14 are diagrams of DCI processing capabilities of a terminal on scheduling carriers;
FIG. 15 and FIG. 16 are diagrams of scheduling a plurality of PDSCHs/PUSCHs on a same carrier by using single DCI; and
FIG. 17 and FIG. 18 are diagrams of apparatuses according to this application.

## DESCRIPTION OF EMBODIMENTS

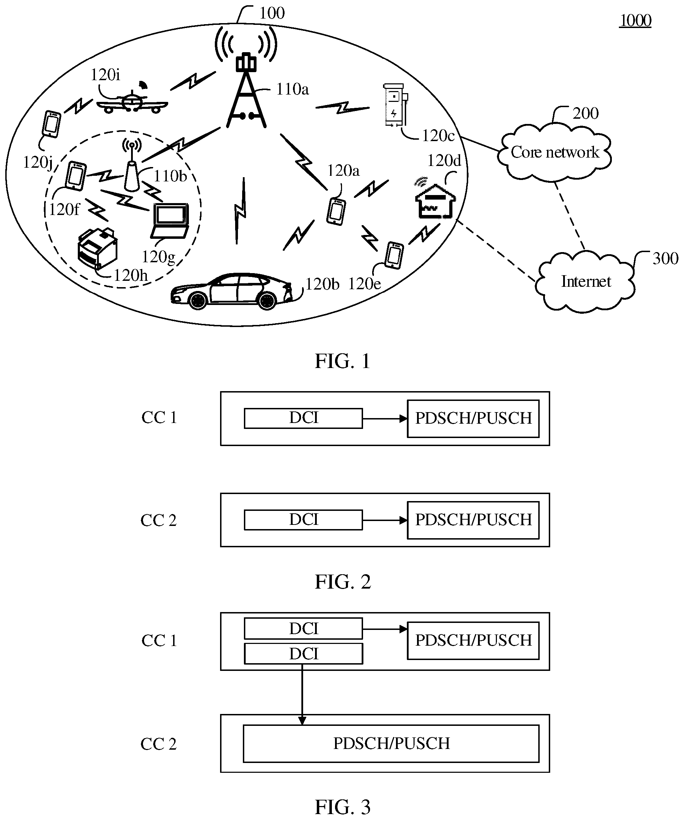

FIG. 1 is a diagram of an architecture of a communication system 1000 to which this application is applicable. As shown in FIG. 1, the communication system includes a radio access network 100 and a core network 200. Optionally, the communication system 1000 may further include an internet 300. The radio access network 100 may include at least one access network device (for example, 110a and 110b in FIG. 1), and may further include at least one terminal (for example, 120a to 120j in FIG. 1). The terminal is connected to the access network device in a wireless manner, and the access network device is connected to the core network in a wireless or wired manner. A core network device and the access network device may be different physical devices that are independent of each other, or functions of a core network device and logical functions of the access network device may be integrated into a same physical device, or some of functions of a core network device and some of functions of the access network device may be integrated into one physical device. Terminals may be connected to each other in a wired or wireless manner, and access network devices may be connected to each other in a wired or wireless manner. FIG. 1 is merely a diagram. The communication system may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes some of functions of a base station, for example, may be a central unit (central unit, CU), a distributed unit (distributed unit, DU), a CU control plane (CU control plane, CU-CP) module, or a CU user plane (CU user plane, CU-UP) module. The access network device may be a macro base station (for example, 110a in FIG. 1), or may be a micro base station or an indoor base station (for example, 110b in FIG. 1), or may be a relay node, a donor node, or the like. A specific technology and a specific device form that are used by the access network device are not limited in this application.

In embodiments of this application, an apparatus configured to implement a function of the access network device may be an access network device, or may be an apparatus that can support the access network device in implementing the function, for example, a chip system, a hardware circuit, a software module, or a combination of the hardware circuit and the software module. The apparatus may be installed in the access network device or may be used together with the access network device. In embodiments of this application, the chip system may include a chip, or may include a chip and another discrete component. For ease of description, the following describes the technical solutions provided in this application by using an example in which the apparatus configured to implement the function of the access network device is an access network device and the access network device is a base station.

(1) Protocol layer structure

Communication between an access network device and a terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

(2) Central unit (central unit, CU) and distributed unit (distributed unit, DU)

An access device may include the CU and the DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. A specific name of each interface is not limited in this application. The CU and the DU may be divided based on protocol layers of a wireless network. For example, functions of a PDCP layer and a protocol layer above the PDCP layer are set on the CU, and functions of protocol layers (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU. This is not limited.

The division into processing functions of the CU and the DU based on the protocol layers is merely an example, and there may be another division manner. For example, the CU or the DU may be divided to have functions of more protocol layers. For another example, the CU or the DU may be further divided to have some processing functions of protocol layers. In a design, some of functions of the RLC layer and functions of a protocol layer above the RLC layer are set on the CU, and remaining functions of the RLC layer and functions of a protocol layer below the RLC layer are set on the DU. In another design, division of functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU. In another design, the CU may alternatively have one or more functions of a core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be divided at a physical layer (physical layer, PHY). For example, the DU may implement higher-layer functions of the PHY layer, and the RU may implement lower-layer functions of the PHY layer. When sending is performed, functions of the PHY layer may include at least one of the following: cyclic redundancy check (cyclic redundancy check, CRC) code addition, channel coding, rate matching, scrambling, modulation, layer mapping, precoding, resource mapping, physical antenna mapping, or radio frequency sending functions. When receiving is performed, functions of the PHY layer may include at least one of the following: CRC check, channel decoding, de-rate matching, descrambling, demodulation, layer demapping, channel detection, resource demapping, physical antenna demapping, or radio frequency receiving functions. The higher-layer functions of the PHY layer may include some functions of the PHY layer. For example, the functions are closer to the MAC layer. The lower-layer functions of the PHY layer may include the other functions of the PHY layer. For example, the functions are closer to the radio frequency function. For example, the higher-layer functions of the PHY layer may include CRC code addition, channel coding, rate matching, scrambling, modulation, and layer mapping, and the lower-layer functions of the PHY layer may include precoding, resource mapping, physical antenna mapping, and radio frequency sending functions. Alternatively, the higher-layer functions of the PHY layer may include CRC code addition, channel coding, rate matching, scrambling, modulation, layer mapping, and precoding. The lower-layer functions of the PHY layer may include resource mapping, physical antenna mapping, and radio frequency sending functions. For example, the higher-layer functions of the PHY layer may include CRC check, channel decoding, de-rate matching, decoding, demodulation, and layer demapping, and the lower-layer functions of the PHY layer may include channel detection, resource demapping, physical antenna demapping, and radio frequency receiving functions. Alternatively, the higher-layer functions of the PHY layer may include CRC check, channel decoding, de-rate matching, decoding, demodulation, layer demapping, and channel detection, and the lower-layer functions of the PHY layer may include resource demapping, physical antenna demapping, and radio frequency receiving functions.

For example, the functions of the CU may be implemented by one entity, or may be implemented by different entities. For example, the functions of the CU may be further divided. To be specific, a control plane and a user plane are separated and implemented by different entities: a control plane CU entity (that is, a CU-CP entity) and a user plane CU entity (that is, a CU-UP entity). The CU-CP entity and the CU-UP entity may be coupled to the DU, to jointly complete functions of an access network device.

Optionally, any one of the DU, the CU, the CU-CP, the CU-UP, and the RU may be a software module, a hardware structure, or a combination of the software module and the hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this application.

In a possible implementation, the access network device includes the CU-CP, the CU-UP, the DU, and the RU. For example, this application is executed by the DU, or the DU and the RU, or the CU-CP, the DU, and the RU, or the CU-UP, the DU, and the RU. This is not limited. The methods performed by the modules also fall within the protection scope of this application.

A terminal may also be referred to as a terminal device, user equipment (user equipment, UE), a mobile station, a mobile terminal, or the like. The terminal may be widely used in communication in various scenarios, for example, including but not limited to at least one of the following scenarios: device-to-device (device-to-device, D2D), vehicle-to-everything (vehicle-to-everything, V2X), machine-type communication (machine-type communication, MTC), an internet of things (internet of things, IoT), virtual reality, augmented reality, industrial control, self-driving, telemedicine, a smart grid, smart furniture, a smart office, a smart wearable, smart transportation, or a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in this application.

In embodiments of this application, an apparatus configured to implement a function of the terminal may be a terminal; or may be an apparatus that can support the terminal in implementing the function, for example, a chip system, a hardware circuit, a software module, or a combination of the hardware circuit and the software module. The apparatus may be installed in the terminal or may be used together with the terminal. For ease of description, the following describes the technical solutions provided in this application by using an example in which the apparatus configured to implement the function of the terminal is UE.

The base station and the terminal may be at fixed locations or movable. The base station and/or the terminal may be deployed on the land, including an indoor or outdoor scenario, and a handheld or vehicle-mounted scenario; or may be deployed on the water; or may be deployed on an airplane, a balloon, and an artificial satellite in the air. Application scenarios of the base station and the terminal are not limited in this application. The base station and the terminal may be deployed in a same scenario or different scenarios. For example, the base station and the terminal are both deployed on the land. Alternatively, the base station is deployed on the land, and the terminal is deployed on the water. Examples are not described one by one.

Roles of the base station and the terminal may be relative. For example, a helicopter or an uncrewed aerial vehicle 120i in FIG. 1 may be configured as a mobile base station, and for the terminal 120j accessing the radio access network 100 through 120i, the terminal 120i is a base station. However, for the base station 110a, 120i is a terminal. In other words, communication between 110a and 120i is performed based on a radio air interface protocol. Alternatively, communication between 110a and 120i may be performed based on an interface protocol between base stations. In this case, relative to 110a, 120i is also a base station. Therefore, the base station and the terminal may be collectively referred to as communication apparatuses, 110a and 110b in FIG. 1 each may be referred to as a communication apparatus having a base station function, and 120a to 120j in FIG. 1 each may be referred to as a communication apparatus having a terminal function.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in this application.

In embodiments of this application, the base station sends a downlink signal or downlink information to the terminal. The downlink information is carried on a downlink channel. The terminal sends an uplink signal or uplink information to the base station. The uplink information is carried on an uplink channel. To communicate with the base station, the terminal may establish a wireless connection to a cell controlled by the base station. The cell to which the terminal establishes the wireless connection is referred to as a serving cell of the terminal. When communicating with the serving cell, the terminal may be interfered by a signal from a neighboring cell.

It may be understood that, in embodiments of this application, a physical downlink shared channel (physical downlink shared channel, PDSCH), a physical downlink control channel (physical downlink control channel, PDCCH), a physical uplink shared channel (physical uplink shared channel, PUSCH), and a physical uplink control channel (physical uplink control channel, PUCCH) are merely examples of a downlink data channel, a downlink control channel, an uplink data channel, and an uplink control channel. In different systems and different scenarios, a data channel and a control channel may have different names. This is not limited in embodiments of this application.

In a design, if a base station expects to schedule UE on a plurality of carriers to simultaneously perform PDSCH or PUSCH transmission, the base station needs to send a plurality of pieces of DCI for scheduling, and each carrier needs one piece of DCI for scheduling. Based on a carrier on which DCI is sent, there are two manners: self-carrier scheduling and cross-carrier scheduling. When self-carrier scheduling is used, DCI for scheduling a PDSCH or a PUSCH on the carrier is also sent on the carrier. Alternatively, it is described as follows: In self-carrier scheduling, DCI and a PDSCH or a PUSCH scheduled by using the DCI are sent on a same CC. For example, as shown in FIG. 2, DCI and a PDSCH or a PUSCH scheduled by using the DCI on the CC 1 are sent on a CC 1. DCI and a PDSCH or a PUSCH scheduled by using the DCI are sent on a CC 2. In cross-carrier scheduling, DCI for scheduling PDSCH or PUSCH transmission on the carrier is sent on another carrier, so that an effect that the DCI is sent on only one carrier is achieved. Alternatively, it is described as follows: In cross-carrier scheduling, DCI and a PDSCH or a PUSCH scheduled by using the DCI may be sent on different CCs. For example, as shown in FIG. 3, DCI is sent on a CC 1, and a PDSCH or a PUSCH is scheduled on a CC 2 by using the DCI.

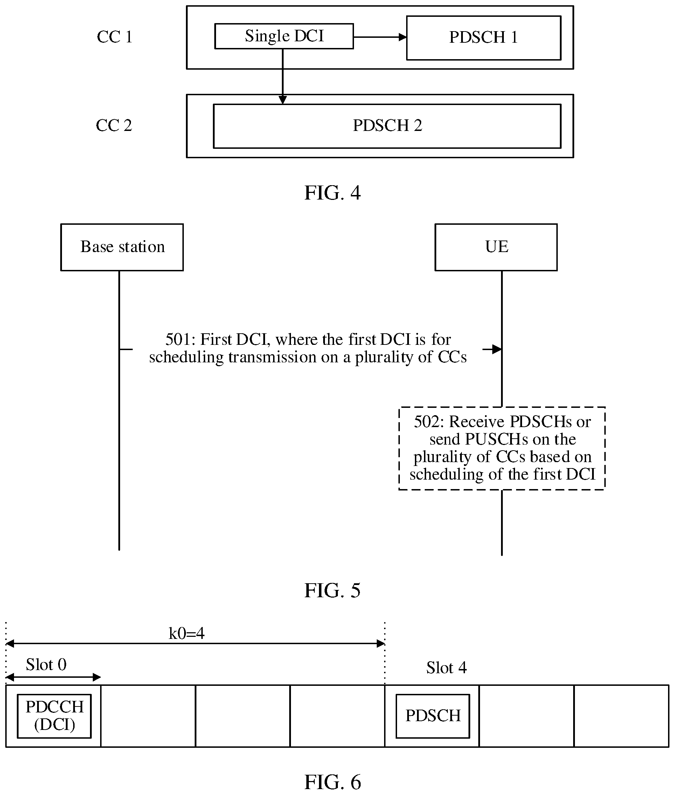

In the foregoing design, regardless of self-carrier scheduling or cross-carrier scheduling, each piece of DCI is generally for scheduling one PDSCH or PUSCH. To reduce overheads of DCI, a solution of single DCI is proposed, and a plurality of PDSCHs or PUSCHs may all be scheduled by using the single DCI. The plurality of PDSCHs or PUSCHs may be on a same CC or different CCs. For example, a plurality of PDSCHs on a same CC may be scheduled by using the single DCI, or a plurality of PDSCHs on different CCs may be scheduled by using the single DCI. Alternatively, a plurality of PUSCHs on a same CC may be scheduled by using the single DCI, or a plurality of PUSCHs on different CCs may be scheduled by using the single DCI. Alternatively, a PDSCH and a PUSCH on a same CC, a PDSCH and a PUSCH on different CCs, or the like may be scheduled by using the single DCI. It should be noted that a PDSCH, a PUSCH, or the like scheduled by using the single DCI is used as an example, and is not intended to limit this application. For example, in another application scenario, another resource, for example, a sidelink resource may be scheduled by using the single DCI. As shown in FIG. 4, single DCI is sent on a CC 1, and both a PDSCH 1 on the CC 1 and a PDSCH 2 on a CC 2 may be scheduled by using the single DCI. A basic principle of a single DCI technology is that PDSCHs or PUSCHs on a plurality of carriers or CCs are scheduled by using single DCI. In comparison with the foregoing self-carrier scheduling or cross-carrier scheduling, a PDSCH or a PUSCH on one carrier or CC is scheduled by using each piece of DCI, so that a quantity of pieces of DCI can be reduced, and overheads of a control channel can be reduced. In embodiments of this application, single DCI includes a plurality of fields. For any field, if corresponding information is configured for a PDSCH or a PUSCH on each CC scheduled by using the single DCI, payload overheads of the single DCI are high. How to reduce the payload overheads of the single DCI is a technical problem to be resolved in this application. It should be noted that in descriptions of embodiments of this application, a PDSCH or a PUSCH may be described as a PDSCH/PUSCH, and "/" represents an "or" relationship.

This application provides a communication method. In the communication method, a plurality of PDSCHs or PUSCHs scheduled by using single DCI may share field information, to reduce payload overheads of the single DCI. As shown in FIG. 5, a procedure of a communication method is provided, and includes at least the following steps.

Step 501: A base station sends first DCI to UE, where the first DCI supports multi-carrier co-scheduling, and the first DCI is for scheduling transmission on a plurality of CCs. Optionally, the first DCI may be referred to as single DCI.

Optionally, step 502: The UE receives PDSCHs or sends PUSCHs on the plurality of CCs based on scheduling of the first DCI.

The first DCI includes a first field, and information carried in the first field is shared by the plurality of CCs. The first field is a general term for fields shared by the plurality of CCs, and the first field may be specifically one or more fields. For example, subsequently, a time domain resource assignment field and a PDSCH-to-hybrid automatic repeat request (hybrid automatic repeat request, HARQ) feedback timing indicator field each may be referred to as the first field. Alternatively, it may be described as follows: The first field includes a plurality of fields, and each of the plurality of fields is shared by the plurality of CCs. The information carried in the first field may be information carried in any one of the fields shared by the plurality of CCs. For example, information k0 carried in the first field may refer to information k0 carried in the time domain resource assignment field, and information k1 carried in the first field may be information k1 carried in the PDSCH-to-HARQ feedback timing indicator field. Optionally, the first DCI further includes a second field, and information carried in the second field is independently configured for each of the plurality of CCs. Optionally, a field in DCI may also be referred to as a DCI field, and information carried in the field in the DCI may be referred to as a field value.

In a design, configuration states of a field in the first DCI include common, sub-group common, flexible, independent, and the like. For example, a configuration state of each field may be specified in a protocol or predefined. This is not limited. For example, the base station may determine, based on a configuration state of each field in the first DCI, corresponding information carried in the field in the first DCI. For a specific field in the first DCI, the field may be referred to as a target field, and information carried in the target field may be referred to as target information.

When a configuration state of the target field is common (common), the information carried in the target field is shared by the plurality of CCs scheduled by using the first DCI. For example, the first DCI schedules PDSCHs or PUSCHs on a first CC and a second CC. In this case, the first DCI may determine the target information based on the PDSCH or the PUSCH on the first CC, or determine the target information based on the PDSCH or the PUSCH on the second CC, or determine the target information based on both the PDSCH or the PUSCH on the first CC and the PDSCH or the PUSCH on the second CC. The target field in the first DCI carries the target information, and the target information is shared by the first CC and the second CC.

Alternatively, when a configuration state of the target field is sub-group common (sub-group common), the target information carried in the target field is shared by a plurality of CCs included in one sub-group scheduled by using the first DCI, where the sub-group may include some of the plurality of CCs scheduled by using the first DCI.

Alternatively, when a configuration state of the target field is flexible (flexible), for example, the target information carried in the target field is shared by the plurality of CCs scheduled by using the first DCI, or the target information carried in the target field is shared by a plurality of CCs included in one sub-group, or the information carried in the target field includes information independently configured for each CC. This is not limited.

Alternatively, when a configuration state of the target field is independent (independent), the target information carried in the target field includes information independently configured for each CC. For example, a PDSCH 1 on the first CC and a PDSCH 2 on the second CC are scheduled by using the first DCI, and the target field in the first DCI carries target information 1 and target information 2. The UE may receive the PDSCH 1 based on the target information 1, receive the PDSCH 2 based on the target information 2.

For example, a field whose configuration state is common includes at least one of the following: an identifier for DCI formats, a carrier indicator, a downlink assignment index, a transmission power control (transmission power control, TPC) command for scheduled PUCCH, a PUCCH resource indicator, a transmission configuration indicator, a second TPC command for scheduled PUCCH, a one-shot HARQ-ACK request, a HARQ-ACK retransmission indicator, a priority indicator, a channel access indicator, a PUCCH cell indicator, or CRC. A field whose configuration state is flexible includes at least one of the following: a bandwidth part (bandwidth part, BWP) indicator, frequency domain resource assignment, time domain resource assignment, virtual resource block (virtual resource block, VRB)-to-physical resource block (physical resource block, PRB) mapping, a PRB bundling size indicator, a rate matching indicator, a zero power (zero power, ZP) channel state information-reference signal (channel state information-reference signal, CSI-RS) trigger, a HARQ process number, a PDSCH-to-HARQ feedback timing indicator, an antenna port and a number of layers, a sounding reference signal (sounding reference signal, SRS) request, code block group (code block group, CBG) transmission information, CBG flushing out information, demodulation reference signal (demodulation reference signal, DMRS) sequence initialization, an enhanced codebook indicator, a PDSCH group, a new feedback indicator, a number of requested PDSCH groups, a minimum scheduling available value, a secondary cell dormancy indication, or a PDCCH monitoring adaptation indication. A field whose configuration state is independent includes at least one of the following: a modulation and coding scheme (modulation and coding scheme, MCS) of a transport block (transport block, TB) 1, a new data indicator of a TB 1, a redundancy version (redundancy version, RV) of a TB 1, an MCS of a TB 2, a new data indicator of a TB 2, or an RV of a TB 2. A field whose configuration state is sub-group common includes at least one of the following: frequency domain resource assignment, time domain resource assignment, an MCS, an MCS of a TB 1, an RV of a TB 1, an MCS of a TB 2, an RV of a TB 2, a TPC command for scheduled PUCCH, a transmission configuration indicator, a second TPC command for scheduled PUCCH, a one-shot HARQ-ACK request, a HARQ-ACK retransmission indicator, a priority indicator, a channel access indicator, or the like.

Downlink data transmission, for example, a PDSCH may be scheduled by using the first DCI. An example in which the first DCI, for scheduling downlink data transmission, is referred to as DL single DCI is used to describe a configuration of each field. Refer to Table 1.

**Table 1 Configuration of each field in DL single DCI**

| Field name | Function description | Quantity of bits | Configuration state |
|---|---|---|---|
| Identifier for DCI formats | Identifying an uplink or a downlink, where when the identifier is 1, it indicates DL DCI (downlink DCI) | 1 | Common |
| Carrier indicator | Cross-carrier scheduling indicator | 0 or 3 | Common |
| BWP indicator | BWP indicator (which may be for BWP switching) | 0, 1, or 2 | Flexible |
| Frequency domain resource assignment | Frequency domain resource assignment | 8 to 15 | Sub-group common |
| Time domain resource assignment | Time domain resource assignment | 0, 1, 2, 3, 4, 5, or 6 | Sub-group common |
| VRB-to-PRB mapping | Mapping manner (interleaving or non-interleaving) | 0 or 1 | Flexible |
| PRB bundling size indicator | Bundling size indicator | 0 or 1 | Flexible |
| Rate matching indicator | Rate matching indicator | 0, 1, or 2 | Flexible |
| ZP CSI-RS trigger | CSI-RS trigger indicator | 0, 1, or 2 | Flexible |
| MCS [TB 1] | Specifying an MCS for transmission, to calculate a TB size | 5 | Sub-group common |
| New data indicator [TB 1] | For determining whether to perform new transmission or retransmission | 1 | Independent |
| RV [TB 1] | Indicating a current redundancy version | 2 | Sub-group common |
| MCS [TB 2] | Specifying an MCS for transmission of the TB 2, to calculate a TB size | 5 | Sub-group common |
| New data indicator [TB 2] | For determining whether the TB 2 is newly transmitted or retransmitted | 1 | Independent |
| RV [TB 2] | Indicating a current redundancy version of the TB 2 | 2 | Sub-group common |
| HARQ process number Process number | HARQ process number | 4 | Flexible |
| Downlink assignment index | Indicating HARQ codebook feedback information | 0, 2, or 4 | Common |
| TPC command for scheduled PUCCH | For power control of the PUCCH | 2 | Common or sub-group common |
| PUCCH resource indicator Resource indicator | Indicating a PUCCH resource | 3 | Common |
| PDSCH-to-HARQ feedback timing indicator | k1, a time interval indicator of a PDSCH-to-HARQ feedback | 0, 1, 2, or 3 | Flexible |
| Antenna port and number of layers | Information about the antenna port and the number of layers | 4, 5, or 6 | Flexible |

(continued)

| Field name | Function description | Quantity of bits | Configuration state |
|---|---|---|---|
| Transmission configuration indicator | Transmission configuration indicator | 0 or 3 | Common or sub-group common |
| SRS request | Triggering an aperiodic SRS feedback | 2, or 3 | Flexible |
| CBG transmission information (CBGTI) | Indicating a CBG that needs to be retransmitted | 0, 2, 4, 6, or 8 | Flexible |
| CBG flushing out information(CBGFI) | Indicating whether a cache needs to be cleared during retransmission | 0 or 1 | Flexible |
| DMRS sequence initialization | DMRS scrambling sequence initialization information | 1 | Flexible |
| Second TPC command for scheduled PUCCH | For power control of the PUCCH | 2 | Common or sub-group common |
| One-shot HARQ-ACK request | Indicating one-shot HARQ-ACK transmission | 0 or 1 | Common or sub-group common |
| Enhanced codebook indicator (Enhanced Type 3 codebook indicator) | Enhanced codebook configuration | 0, 1, 2, or 3 | Flexible |
| PDSCH group | Indicating a PDSCH group | 0 or 1 | Flexible |
| New feedback indicator | Indicating new feedback transmission | 0, 1, or 2 | Flexible |
| Number of requested PDSCH groups | Indicating a quantity of PDSCH groups | 0 or 1 | Flexible |
| HARQ-ACK retransmission indicator | Indicating HARQ-ACK retransmission | 0 or 1 | Common or sub-group common |
| Priority indicator | Indicating a priority | 0 or 1 | Common or sub-group common |
| Channel access indicator (channelAccess-Cpext) | Indicating a channel access process of shared spectrum channel access | 0, 1, 2, 3, or 4 | Common or sub-group common |
| Minimum scheduling available value (Minimum applicable scheduling offset indicator) | Indicating a minimum available value of k0/k2 | 0 or 1 | Flexible |
| Secondary cell (SCell) dormancy indication | Dormancy configuration | 0, 1, 2, 3, 4, or 5 | Flexible |
| PDCCH monitoring adaptation indication | Monitoring indication in search space | 0, 1, or 2 | Flexible |
| PUCCH cell indicator | Indicating a PUCCH cell | 0 or 1 | Common |
| CRC | Cyclic redundancy check code | 24 | Common |

Alternatively, uplink data transmission, for example, a PUSCH is scheduled by using the first DCI. An example in which the first DCI, for scheduling uplink data transmission, is referred to as UL single DCI is used to describe a configuration of each field. Refer to Table 2.

**Table 2 Configuration of each field value in UL single DCI**

| Name | Function description | Quantity of bits | Configuration state |
|---|---|---|---|
| Identifier for DCI formats | Identifying an uplink or a downlink, where when the identifier is 1, it indicates DL DCI (downlink DCI) | 1 | Common |
| Carrier indicator | Cross-carrier scheduling indicator | 0 or 3 | Common |
| Downlink feedback indicator (DFI) flag | Indicating a downlink feedback | 0 or 1 | Common |
| UL carrier or SUL carrier indicator (UL/SUL indicator) | Indicating whether an SUL carrier is configured in a cell | 0 or 1 | Flexible |
| BWP indicator | BWP indicator (which may be for BWP switching) | 0, 1, or 2 | Flexible |
| Frequency domain resource assignment | Frequency domain resource assignment | 8 to 15 | Sub-group common |
| Time domain resource assignment | Time domain resource assignment | 0, 1, 2, 3, 4, 5, or 6 | Sub-group common |
| Frequency hopping flag | Indicating whether PUSCH frequency hopping is used | 0 or 1 | Independent |
| MCS | Specifying an MCS for transmission, to calculate a TB size | 5 | Sub-group common |
| New data indicator | For determining whether to perform new transmission or retransmission | 1 | Independent |
| RV | Indicating a current redundancy version | 2 | Sub-group common |
| HARQ process number | HARQ process number | 4 | Flexible |
| Downlink assignment index 1st downlink assignment index | Indicating HARQ codebook feedback information | 1, 2, or 4 | Common |
| Downlink assignment index 2nd downlink assignment index | Indicating HARQ codebook feedback information | 0, 2, or 4 | Common |
| TPC command for scheduled PUCCH | For power control of the PUCCH | 2 | Common or sub-group common |
| Second TPC command for scheduled PUCCH | For power control of the PUCCH | 0 or 2 | Common or sub-group common |
| SRS resource set indicator | Indicating an SRS resource set | 0 or 2 | Flexible |
| SRS resource indicator | Indicating an SRS resource | 0 or 1 | Flexible |
| Second SRS resource indicator | Indicating an SRS resource | 0 or 1 | Flexible |
| Precoding information and number of layers | Specifying precoding used for PUSCH transmission | 0, 1, 2, 3, 4, 5, or 6 | Independent |
| Second precoding information | Specifying precoding used for PUSCH transmission | 0, 1, 2, 3, 4, or 5 | Independent |
| Antenna port | Indicating antenna port information | 2, 3, 4, or 5 | Independent |
| SRS request | For triggering UE to perform aperiodic SRS reporting | 2 or 3 | Flexible |
| SRS offset indicator | Indicating an SRS offset | 0, 1, or 2 | Flexible |

(continued)

| Name | Function description | Quantity of bits | Configuration state |
|---|---|---|---|
| CSI request | Indicating a CSI scheduling request | 0, 1, 2, 3, 4, 5, or 6 | Independent |
| CBG transmission information | Indicating a CBG that needs to be retransmitted | 0, 2, 4, 6, or 8 | Flexible |
| PTRS-DMRS association | Indicating a relationship between a PTRS port or a DMRS port | 0 or 2 | Flexible |
| Second PTRS-DMRS association | Indicating a relationship between a PTRS port or a DMRS port | 0 or 2 | Flexible |
| DMRS sequence initialization (SCID) | DMRS scrambling sequence initialization information | 0 or 1 | Flexible |
| UL-SCH indicator | Distinguishing between data or signaling | 1 | Independent |
| Channel access indicator (ChannelAccess-CPext-CAPC) | Indicating a channel access process of shared spectrum channel access | 0, 1, 2, 3, 4, 5, or 6 | Common or sub-group common |
| Open-loop power control parameter set indication | Indicating information related to open-loop power control | 0, 1, or 2 | Flexible |
| Priority indicator | Indicating a priority | 0 or 1 | Common or sub-group common |
| Minimum scheduling offset Indicator (Minimum applicable scheduling offset indicator) | Indicating a minimum available value of k0/k2 | 0 or 1 | Flexible |
| SCell dormancy indication | Dormancy configuration | 0, 1, 2, 3, 4, or 5 | Flexible |
| Sidelink assignment index | Configuration related to a sidelink | 0, 1, or 2 | Flexible |
| PDCCH monitoring adaptation indication | Monitoring indication in search space | 0, 1, or 2 | Flexible |
| CRC | Cyclic redundancy check | 24 | Common |

In a design, the first DCI is referred to as single DCI. A plurality of CCs are co-scheduled by using the single DCI, and each CC corresponds to one cell. Cells co-scheduled by using the single DCI may be grouped, and cells in a group may further share more fields. For example, the base station configures, by using RRC signaling, the cells co-scheduled by using the single DCI as four cells, namely, a cell 1, a cell 2, a cell 3, and a cell 4, and divides the four cells into two groups, namely, a sub-group 1={cell 1, cell 2} and a sub-group 2={cell 3, cell 4}. Herein, specific sub-group division may be configured by the base station by using the RRC signaling. An optional division manner is to divide cells with close frequency bands (bands) into a same sub-group. For example, when frequency bands corresponding to the four cells co-scheduled by using the single DCI are respectively: 700 M, 800 M, 1.8 G, and 2.1 G, considering that frequency bands, that is, 700 M and 800 M, of two cells are close, the two cells of 700 M and 800 M may be configured as one sub-group. Similarly, two cells of 1.8 G and 2.1 G are configured as another sub-group.

For the foregoing group configuration based on the co-scheduled cells, a configuration state of each field in the single DCI may be designed as follows:

For a field configured as "common", all cells still share one piece of indication information.

For a field configured as "independent", all cells are still indicated independently, to be specific, each co-scheduled cell needs a piece of corresponding indication information in the DCI.

For a field configured as "sub-group common", that is, for a cell in a sub-group, an indication value of the field is shared by cells in the sub-group, and for cells in different subgroups, the field is still independently configured. Optionally, for the "sub-group common" field, the field carries only one piece of indication information, and the indication information is shared by a plurality of cells included in the sub-group. The indication information may be determined based on a state of one cell included in the sub-group, or may be jointly determined based on states of the plurality of cells included in the sub-group. This is not limited.

For example, an MCS field may be configured as "sub-group common". As described above, the cell 1 and the cell 2 belong to one sub-group, the sub-group may share one piece of MCS indication information, the MCS indication information may be determined based on a configuration of the cell 1 or the cell 2, and the MCS indication information may be denoted as A. The cell 3 and the cell 4 belong to another sub-group, the sub-group may share one piece of MAC indication information, the MSC indication information may be determined based on a configuration of the cell 3 or the cell 4, and the MCS indication information may be denoted as B. A and B perform independent indication. In other words, the MCS field may include two pieces of indication information: A and B.

For another example, a frequency domain resource assignment field is configured as that cells in a same sub-group may be jointly indicated by using a field value. Herein, frequency domain resource assignment may be indicated in an indication manner, namely, Type 0, in which frequency domain resources are not allocated contiguously. To be specific, assignment is performed at an RBG granularity, and indication is performed in a bitmap manner. A bitmap length is a quantity of RBGs in a BWP. It is assumed that when the cell 1 (configured with a bandwidth of 10 M) and the cell 2 (configured with a bandwidth of 10 M) included in the sub-group are independently indicated, the RBG granularity is 4, the two cells each require 14 bits (10 M/180 kHz=56, 56/4=14) to indicate frequency domain resource assignment, and a total of 28 bits are required. When the cell 1 and the cell 2 included in the sub-group are jointly indicated, the cell 1 and the cell 2 are combined to be equivalent to a cell of a bandwidth of 20 M, and the RBG granularity is increased and set to 8. In this case, only 14 bits (20 M/180 kHz=112, 112/8=14) are required.

It can be learned from the foregoing two examples that, in comparison with a configuration in which all the four cells are independently indicated, in this intra-group common and inter-group independent configuration manner, overheads of fields in the single DCI can be further reduced.

It should be noted that, for a field configured as "flexible", the base station may flexibly configure a state by using RRC signaling, and optional configuration states include: "common", "independent", or "sub-group common".

In this embodiment of this application, in comparison with scheduling of a plurality of pieces of DCI in an existing CA mechanism, a design in which a plurality of CCs are scheduled by using the first DCI can significantly reduce overheads of a control channel, release more downlink resources for PDSCH transmission, and improve a downlink capacity. In addition, a sharing design for a specific field in the first DCI reduces overheads of a size of the DCI, and ensures system coverage performance.

It can be learned from the foregoing descriptions that configuration states of the time domain resource assignment field and the PDSCH-to-HARQ feedback timing indicator field in the first DCI are flexible. When the time domain resource assignment field is specifically configured to be shared by a plurality of CCs, information k0 carried in the time domain resource assignment field may be shared by the plurality of CCs. When the PDSCH-to-HARQ feedback timing indicator field is configured to be shared by the plurality of CCs, the information k1 carried in the PDSCH-to-HARQ feedback timing indicator field may be shared by the plurality of CCs. The following specifically describes how the plurality of CCs share k0 and k1.

k0 refers to a time interval between receiving a PDCCH and sending a PDSCH. The PDCCH carries DCI for scheduling the PDSCH.

A unit of the time interval is a time unit for transmitting or scheduling information, such as a symbol, a slot, a frame, or a subframe. For specific descriptions of the time unit, refer to the following descriptions. Subsequently, k0 is described by using a slot as a unit. As shown in FIG. 6, a PDCCH is received in a slot 0, and the PDCCH carries DCI. If a value of k0 carried in the DCI is 4, the UE may receive, in a slot 4, a PDSCH scheduled by using the DCI. As described above, if the configuration state of the time domain resource assignment field in the first DCI is flexible, the time domain resource assignment field in the first DCI may be set to be common, sub-group common, or independent. When the time domain resource assignment field in the first DCI is set to be independent, and the time domain resource assignment field includes a plurality of offset values k0, each offset value k0 corresponds to a PDSCH on one CC scheduled by using the DCI, in other words, k0 is separately configured for a PDSCH on each CC scheduled by using the DCI. No additional constraint rule is required, but a specific quantity of bits are added. The following describes a design of k0 when the time domain resource assignment field is set to be common.

In this embodiment of this application, when the information k0 carried in the time domain resource assignment field in the first DCI is configured to be shared by the plurality of CCs, k0 indicates an offset value between a first reference location and a time unit corresponding to a PDSCH on one of the plurality of CCs scheduled by using the first DCI, and the first reference location is determined based on a time unit corresponding to the first DCI. For example, a unit of the time unit may be a unit such as a radio frame (radio frame), a subframe (subframe), a slot (slot), a mini-slot (mini-slot), or a symbol (symbol). For example, in a specific implementation, one time unit may include two slots. One radio frame may include one or more subframes, and one subframe may include one or more slots. There may be different slot lengths for different subcarrier spacings. For example, one slot may be 1 millisecond (ms) when a subcarrier spacing is 15 kHz; or one slot may be 0.5 ms when a subcarrier spacing is 30 kHz. One slot may include one or more symbols. For example, one slot with a normal cyclic prefix (cyclic prefix, CP) may include 14 time domain symbols, and one slot with an extended CP may include 12 time domain symbols. The time domain symbol may be referred to as a symbol for short. The time domain symbol may be an orthogonal frequency division multiplexing (orthogonal frequency division multiplexing, OFDM) symbol, or may be a discrete Fourier transform spread orthogonal frequency division multiplexing (discrete Fourier transform spread orthogonal frequency division multiplexing, DFT-s-OFDM) symbol. A mini-slot, may be a smaller unit than a slot, and one mini-slot may include one or more symbols. For example, one mini-slot may include two symbols, four symbols, or seven symbols. One slot may include one or more mini-slots. In subsequent descriptions, an example in which the unit of the time unit is a slot is mainly used for description.

For example, when the plurality of CCs scheduled by using the first DCI include the first CC and the second CC, when numerologies (numerologies) of the first CC and the second CC are the same, subcarrier spacings (subcarrier spacings, SCSs) corresponding to the first CC and the second CC are the same, slot lengths corresponding to the first CC and the second CC are the same, corresponding slot locations for transmitting DCI on the first CC and the second CC are also the same. The first reference location may be the slot location for transmitting the DCI on the first CC or on the second CC. In other words, k0 may refer to a time interval between a slot location for transmitting a PDCCH and a slot location for transmitting a PDSCH, and the PDCCH carries the first DCI. The numerology is described as follows:

The numerology includes an SCS, a symbol length, a slot length, a cyclic prefix (cyclic prefix, CP) length, and the like. A new feature in a new radio (new radio, NR) system is that a plurality of numerologies may be used mixedly and simultaneously. As shown in Table 3, the following numerologies may be currently supported in NR:

**Table 3 Frame structure configuration in NR**

| SCS (kHz) | Numerology ($\mu$) | Quantity of slots included in each subframe | Quantity of slots included in each frame | Slot length (ms) |
|---|---|---|---|---|
| 15 | 0 | 1 | 10 | 1 |
| 30 | 1 | 2 | 20 | 1/2 |
| 60 | 2 | 4 | 40 | 1/4 |
| 120 | 3 | 8 | 80 | 1/8 |
| 240 | 4 | 16 | 160 | 1/16 |

As shown in Table 3, an index of the numerology is represented by $\mu$, and a value of $\mu$ ranges from 0 to 4. For example, when the value of $\mu$ is 0, an SCS corresponding to $\mu$ is 15 kHz, a slot length is 1 ms, each subframe includes one slot, and each frame includes 10 slots. When the value of $\mu$ is 1, an SCS corresponding to $\mu$ is 1/2=0.5 ms, each subframe includes two slots, and each frame includes 20 slots. It can be learned that different numerologies correspond to different SCSs, and corresponding slot lengths at the SCSs are different.

For example, the plurality of CCs scheduled by using the first DCI include the first CC and the second CC, and numerologies of the first CC and the second CC are different. In this case, an SCS of the first CC is different from an SCS of the second CC, and a slot length of the first CC is different from a slot length of the second CC. If the SCS of the first CC is set to be less than the SCS of the second CC, the first reference location may refer to a time unit corresponding to the first DCI on the second CC, and k0 indicates an offset value between the time unit corresponding to the first DCI on the second CC and the time unit corresponding to the PDSCH (which is also referred to as a slot interval between the time unit corresponding to the first DCI on the second CC and the time unit corresponding to the PDSCH). In this case, the method further includes: The UE determines, based on the SCS of the first CC, the SCS of the second CC, and k0, an offset value between a time unit corresponding to the first DCI and a time unit corresponding to a PDSCH on the first CC. For example, that the UE determines, based on the SCS of the first CC, the SCS of the second CC, and k0, the offset value between the time unit corresponding to the first DCI and the time unit corresponding to the PDSCH on the first CC satisfies the following condition:

$$\mathrm{floor}(k0/(2^{\mu_1 - \mu_2})) \quad \text{Formula 1}$$

floor represents a round-down operation, k0 represents the offset value between the time unit corresponding to the first DCI and the time unit on the second CC corresponding to the PDSCH, $\mu_1$ represents an index of the SCS corresponding to the second CC, and $\mu_2$ represents an index of the SCS corresponding to the first CC.

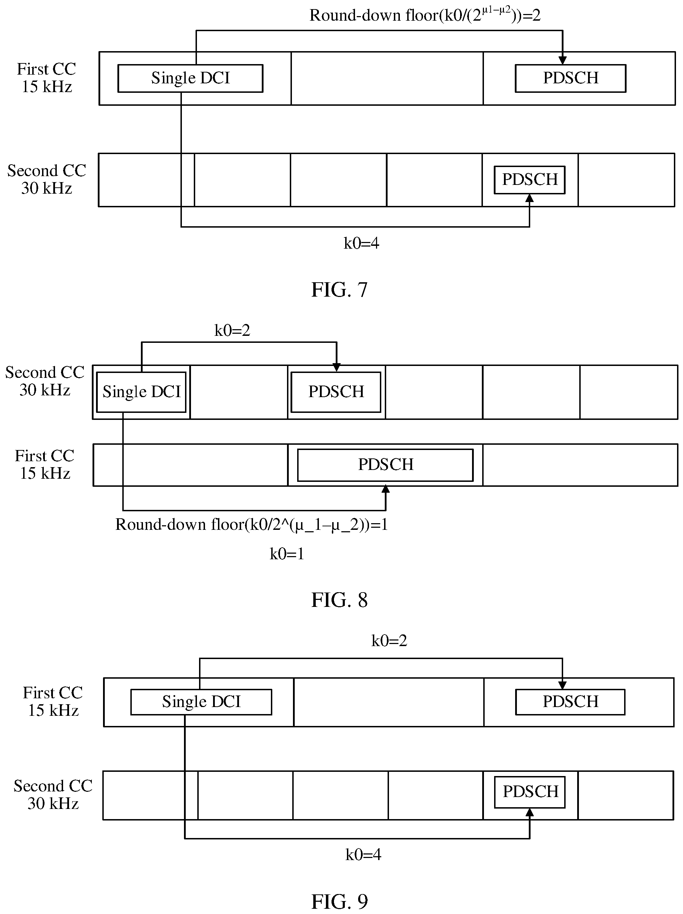

For example, as shown in FIG. 7, the first DCI is single DCI, the SCS of the first CC is 15 kHz, and the SCS of the second CC is 30 kHz is used. The base station sends the single DCI on the first CC, where the PDSCH on the first CC and the PDSCH on the second CC are scheduled by using the single DCI. k0 carried in the first DCI may indicate a time interval between a slot corresponding to the single DCI on the second CC and a slot corresponding to the PDSCH on the second CC. A value of k0 is set to be equal to 4. In this case, the UE receives the PDSCH at a location obtained by offsetting the slot corresponding to the single DCI on the second CC by four slots in a direction in which a slot number increases.

When the SCS of the first CC is equal to 15 kHz, and the SCS of the second CC is equal to 30 kHz, the slot length of the first CC is equal to twice the slot length of the second CC. In this embodiment of this application, a slot location for receiving the PDSCH on the first CC may be further calculated based on the foregoing formula 1. A specific calculation process is as follows:

For example, refer to the following Table 4. When a value of the SCS is 30 kHz, the value of $\mu$ is 1. When a value of the SCS is 15 kHz, the value of $\mu$ is 0. In the scenario shown in FIG. 7, a value of $\mu_1$ is equal to 1, a value of $\mu_2$ is 0, and a value of k0 is equal to 4. When the values of $\mu_1$, $\mu_2$, and k0 are respectively substituted into the foregoing formula 1, a calculation result 2 may be obtained. A slot interval between a slot location at which the UE receives the single DCI and a slot location at which the UE receives the PDSCH on the first CC is 2.

**Table 4 Configurations of different subcarrier spacings in NR**

| $\mu$ | $\Delta f = 2^{\mu} \cdot 15[kHz]$ | CP |
|---|---|---|
| 0 | 15 | Normal |
| 1 | 30 | Normal |
| 2 | 60 | Normal or extended |
| 3 | 120 | Normal |
| 4 | 240 | Normal |

It should be noted that, in Table 4, the CP may be referred to as a CP length or a CP type, which is referred to a CP for short. The CP type may be an extended CP (extended CP, ECP) or a normal (normal) CP (normal, NCP). One slot at an extended CP may include 12 time domain symbols. One slot at a normal CP may include 14 time domain symbols.

For example, as shown in FIG. 8, the first DCI is single DCI, the SCS of the first CC is 15 kHz, and the SCS of the second CC is 30 kHz is used. The base station sends the single DCI on the second CC, where the PDSCH on the first CC and the PDSCH on the second CC are scheduled by using the single DCI. k0 carried in the first DCI may indicate a time interval between a slot corresponding to the single DCI on the second CC and a slot corresponding to the PDSCH on the second CC. A value of k0 is set to be equal to 2. In this case, the UE receives the PDSCH at a location obtained by offsetting a slot location corresponding to the single DCI on the second CC by two slots in a direction in which a slot number increases.

In this embodiment of this application, a slot location for receiving the PDSCH on the first CC may be further calculated based on the foregoing formula 1. It can be found from Table 4 that, when the SCS of the first CC is 30 kHz, the value of $\mu_1$ is 1; and when the SCS of the first CC is 15 kHz, the value of $\mu_2$ is 0. In addition, the value of k0 is equal to 2. The values of $\mu_1$, $\mu_2$, and k0 are substituted into the foregoing formula 1, and a calculation result is equal to 1. In this case, the offset value between the slot corresponding to the single DCI of the UE on the first CC and the slot corresponding to the PDSCH is equal to 1. Subsequently, the UE receives the PDSCH on the first CC at a location obtained by offsetting by one slot relative to the single DCI.

Alternatively, in another design, k0 carried in the time domain resource assignment field in the first DCI indicates an offset between a time unit corresponding to the first DCI and a time unit corresponding to a PDSCH on the first CC. In other words, the first reference location is the time unit corresponding to the first DCI on the first CC. The method further includes: The UE determines, based on the time unit corresponding to the PDSCH on the first CC, a time unit corresponding to a PDSCH on the second CC. Alternatively, the UE receives indication information from the base station, where the indication information indicates an offset value between a time unit corresponding to the first DCI on the second CC and the time unit corresponding to the PDSCH. Alternatively, the UE determines, based on a third field in the first DCI, a time unit corresponding to a PDSCH on the second CC, where the third field indicates an offset value between the time unit corresponding to the PDSCH on the first CC and the time unit corresponding to the PDSCH on the second CC.

For example, as shown in FIG. 9, the first DCI is single DCI, the SCS of the first CC is 15 kHz, and the SCS of the second CC is 30 kHz is used. The base station sends the single DCI on the first CC, where the PDSCH on the first CC and the PDSCH on the second CC are scheduled by using the single DCI. k0 carried in the first DCI may indicate a time interval between a slot corresponding to the single DCI on the first CC and a slot corresponding to the PDSCH on the second CC. A value of k0 is set to be equal to 2. In this case, the UE offsets, in a first slot corresponding to the single DCI on the first CC, by a location of two slots in a direction in which a slot number increases, to receive the PDSCH.

The UE determines, based on a slot corresponding to the PDSCH on the first CC, the slot corresponding to the PDSCH on the second CC. Because the SCS of the first CC is different from the SCS of the second CC, a slot length of the first CC is equal to twice a slot length of the second CC. A slot location of the PDSCH on the first CC is equivalent to two slots on the second CC, and the PDSCH may be received in the first slot in the foregoing two slots. Certainly, the PDSCH may alternatively be received in the second slot in the foregoing two slots. This is not limited. Alternatively, the base station may send another piece of indication information to the UE, where the indication information may indicate another offset value k0, and k0 indicates an offset between the slot corresponding to the single DCI and a slot for transmitting the PDSCH on the second CC. The indication information may be RRC signaling, and the RRC signaling is for semi-statically configuring the another offset value k0. Alternatively, the indication information may be DCI, and the another offset value k0 and the like are dynamically configured by using the DCI. Alternatively, a field is newly added to the single DCI, and the field may be referred to as a third field, and may indicate an offset of the slot corresponding to the PDSCH on the second CC relative to the slot corresponding to the PDSCH on the first CC.

Currently, a time domain resource assignment (time domain resource assignment, TDRA) field in downlink DCI indicates an index (index) value in a time domain resource assignment table, and the time domain resource assignment table may also be referred to as a time domain resource assignment list. The time domain resource assignment table may be predefined in a protocol, or may be configured by the base station for a terminal by using RRC signaling. This is not limited. As shown in the following Table 5, each row in the time domain resource assignment table includes DCI, a slot offset k0 of a scheduled data channel, a start symbol and length (start symbol and length, SLIV) of the data channel, and a mapping type (mappingType). Alternatively, it is described as follows: An index in the time domain resource assignment table indicates a combination of k0, a start symbol of a data channel, a length of the data channel, and a mapping type. For example, the time domain resource assignment table may be predefined, specified in a protocol, or configured by the base station for the terminal by using RRC signaling. This is not limited. For example, the base station may configure the time domain resource table by using the RRC signaling, and each row in the time domain resource table may be indicated by using an information element IE PDSCH-TimeDomainResourceAllocation in the RRC signaling. The information element is defined as follows:

PDSCH-TimeDomainResourceAllocation ::= SEQUENCE {

k0                                                                                              INTEGER(0..32)

OPTIONAL,    -- Need S

mappingType                                          ENUMERATED {typeA, typeB},

startSymbolAndLength                      INTEGER (0..127)

}.

In other words, in the foregoing descriptions, k0 may not be directly carried in the downlink DCI, but the index in the time domain resource assignment table shown in the following Table 5 is carried in the DCI, and the index may implicitly indicate k0. In this embodiment of this application, when a configuration state of the time domain resource assignment TDRA field in the DCI is independent, when PDSCHs are scheduled on a plurality of CCs by using the single DCI, the single DCI carries an index value corresponding to each CC, and the index value is also referred to as a TDRA value.

For example, PDSCHs on three carriers: a CC 1, a CC 2, and a CC 3 are co-scheduled by using the single DCI. In this case, the time domain resource assignment TDRA field in the single DCI may indicate three values, which are respectively TDRA 1, TDRA 2, and TDRA 3, corresponding to the CC 1, the CC 2, and the CC 3. For example, values of TDRA 1, TDRA 2, and TDRA 3 may be respectively 1, 2, and 4. It can be found from the following Table 5 that, when indexes are respectively 1, 2, and 4, corresponding values of k0 are respectively 0, 0, and 1. It indicates that a slot offset between a PDSCH scheduled on the CC 1 by using the single DCI and the single DCI is 0, a slot offset between a PDSCH scheduled on the CC 2 and the single DCI is 0, and a slot offset between a PDSCH scheduled on the CC 3 and the single DCI is 1.

**Table 5 Time domain resource assignment table**

| TDRA | | | |
|---|---|---|---|
| Index | k0 | SLIV | Mapping type |
| 1 | 0 | SLIV 1 | Type A |
| 2 | 0 | SLIV 2 | Type A |
| 3 | 0 | SLIV 1 | Type B |
| 4 | 1 | SLIV 3 | Type A |

(continued)

| TDRA | | | |
|---|---|---|---|
| Index | k0 | SLIV | Mapping type |
| 5 | ... | ... | ... |
| 6 | ... | ... | ... |

In the time domain resource assignment table shown in Table 5, a value of k0 is an integer ranging from 0 to 32; a value of the SLIV ranges from 0 to 127, and a start symbol of PDSCH transmission and a quantity of consecutive symbols may be calculated by using the SLIV; and the mapping type may be Type A or Type B.

In the foregoing design, when the single DCI is used for multi-carrier co-scheduling, a TDRA value or an index corresponding to each CC needs to be indicated. In an improved solution, when a configuration state of the single DCI is common, the time domain resource assignment table shown in Table 5 is further improved. For an improved time domain resource assignment table, refer to the following Table 6.

**Table 6 Time domain resource assignment table**

| TDRA | | | | |
|---|---|---|---|---|
| Index | k0 | SLIV | Mapping type | Scheduling offset to k0 |
| 1 | 0 | SLIV 1, SLIV 2, ... | Type A | Offset 1, offset 2, ... |
| 2 | 1 | SLIV 1, SLIV 2, ... | Type A | Offset 1, offset 2, ... |
| 3 | 2 | SLIV 1, SLIV 2, ... | Type A | Offset 1, offset 2, ... |
| 4 | 3 | SLIV 1, SLIV 2, ... | Type A | Offset 1, offset 2, ... |
| 5 | 4 | SLIV 1, SLIV 2, ... | Type B | Offset 1, offset 2, ... |
| 6 | ... | ... | ... | ... |

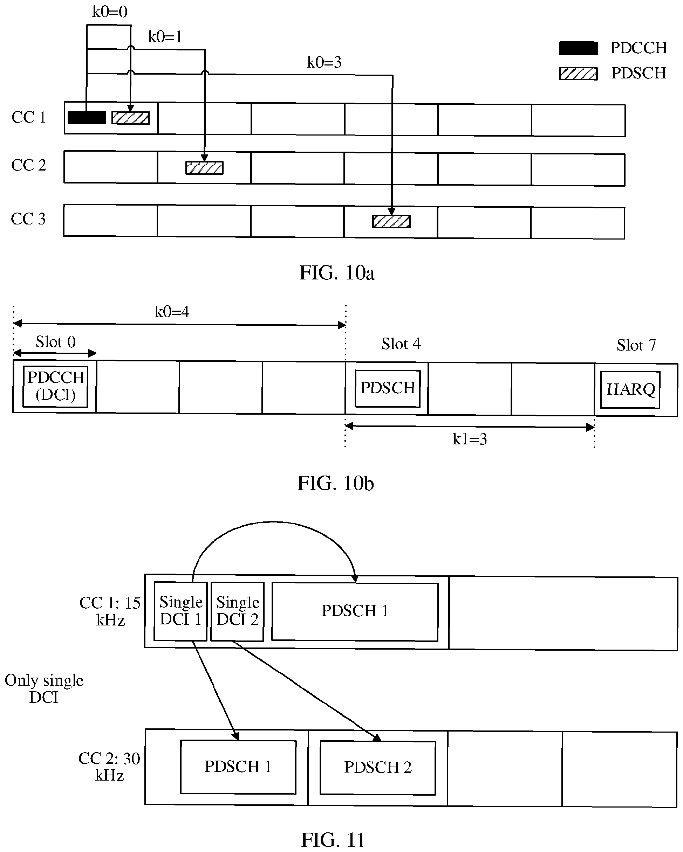

Based on the time domain resource assignment table shown in Table 6, when a configuration state of time domain resource assignment TDRA in the single DCI is common, locations for receiving PDSCHs on a plurality of CCs co-scheduled by using a plurality of pieces of single DCI may be indicated by using one row in Table 6. To be specific, when the plurality of CCs are scheduled by using the single DCI, a time domain resource assignment TDRA field in the single DCI may carry one index or TDRA value, to indicate the locations for receiving the PDSCHs on the plurality of CCs. For example, refer to Table 6. The scheduling offset to k0 (scheduling offset to k0) field may be newly added to the time domain resource assignment table to indicate an offset relative to k0 on a CC, to determine locations for receiving PDSCHs on different CCs. For example, as shown in FIG. 10a, three carriers, namely, a CC 1, a CC 2, and a CC 3, are co-scheduled by using single DCI, and a time domain resource assignment TDRA field in the single DCI is configured to be common. In this case, the single DCI may carry one index, where the index is also referred to as a TDRA value, and locations for receiving corresponding PDSCHs on the three CCs may be determined based on the TDRA value. For example, the TDRA value carried in the single DCI may be determined based on the CC 1, and the TDRA value may also indicate an offset between a slot corresponding to the DCI on the CC 1 and a slot corresponding to a PDSCH scheduled on the CC 1. For example, the TDRA value carried in the single DCI is an index 1. It may be found from Table 6 that k0 corresponding to the index 1 is equal to 0, indicating that on the CC 1, the single DCI and the PDSCH are transmitted in a same slot. Locations for receiving PDSCHs scheduled on the CC 2 and the CC 3 may be determined by using the scheduling offset to k0 indicated by the index=1 in Table 6. For example, in the foregoing configuration in which the index=1, values of the offset 1, the offset 2, and an offset 3 are respectively 0, 1, and 3, which each represent an offset between a PDSCH scheduled on each CC and a PDSCH scheduled on the CC 1 in the foregoing three CCs. For the CC 1, it is clear that an offset value corresponding to the CC 1 is 0. For the CC 2 and the CC 3, offsets between the PDSCHs corresponding to the CC 2 and the CC 3 and the PDSCH scheduled on the CC 1 are respectively 1 and 3. This indicates that a location of the PDSCH scheduled on the CC 1 is respectively offset by one slot and two slots in a time domain increase direction, and obtained locations are a location of a PDSCH scheduled on the CC 2 and a location of a PDSCH scheduled on the CC 3. Optionally, in the configuration in which the index=1, based on an actual scheduling status, the SLIV 1, the SLIV 2, and an SLIV 3 may be any three values in 0 to 127, and a mapping type may be Type A.

It should be noted that, in the foregoing descriptions, an example in which k0 indicated by the index carried in the single DCI is a slot offset between a PDCCH corresponding to a CC with a smallest index and the PDSCH scheduled on the CC 1 is used for description. For example, in FIG. 10a, the CC 1, the CC 2, and the CC 3 are co-scheduled by using the single DCI, and the CC 1 is used as a CC with a smallest index. k0 indicates that a slot offset between a PDCCH corresponding to the CC 1 and the PDSCH on the CC 1 is 0, in other words, the PDCCH and the PDSCH are transmitted in a same slot. The values of the offset 1, the offset 2, and the offset 3 in the time domain resource assignment table shown in Table 6 are respectively 0, 1, and 3, and each indicate an offset between each PDSCH in the three CCs and the PDSCH on the CC 1. For example, a slot offset between the PDSCH on the CC 2 and the PDSCH on the CC 1 is 1, and a slot offset between the PDSCH on the CC 3 and the PDSCH on the CC 1 is 3. Optionally, for the CC with the smallest index, namely, the CC 1, an offset may not be indicated anymore. Alternatively, k0 is determined based on a time unit in which a PDSCH is sent earliest on each CC. For example, as shown in FIG. 10a, the CC 1, the CC 2, and the CC 3 are co-scheduled by using the single DCI. In comparison with other CCs, the PDSCH scheduled on the CC 1 in the three CCs is sent earliest. The PDSCH on the CC 1 is determined based on an indication of k0, and indications of other CCs relative to k0 are offset values. If time units in which PDSCHs are sent on the CC 1 and the CC 2 are both earliest, a CC with a smaller index on the CC 1 and the CC 2 may be selected for determining. An advantage of determining k0 by using this method is that an offset is a value greater than or equal to 0. Alternatively, the base station may specify a CC, and determine the value of k0 based on the CC. However, a possibility that the offset has a negative value needs to be considered herein. Optionally, a direction in which time increases may be a positive direction. For example, the value of k0 may be determined based on the CC 2 in FIG. 10a. In this case, the indication of k0 is 1, and scheduling offset indications may respectively be -1, 0, and 2. This method is more flexible, but a case in which the offset may be less than 0 needs to be considered.

Optionally, the time domain resource assignment table shown in Table 6 may be configured by the base station for the terminal by using RRC signaling. For example, the RRC signaling includes an information element PDSCH-Time-DomainResourceAllocation. The information element may be defined as follows:

```
PDSCH-TimeDomainResourceAllocation ::=      SEQUENCE {
    k0                                          INTEGER(0..32)
OPTIONAL, -- Need S
        mappingType                             ENUMERATED {typeA,
typeB},
        startSymbolAndLength                    INTEGER (0..127)
        scheduling offset to k0                 INTEGER (0..32)
    }.
```

Optionally, the time domain resource assignment table shown in Table 6 is applicable to both an indication of a downlink PDSCH and an indication of an uplink PUSCH. A difference lies in that in uplink DCI, an index value carried in a time domain resource assignment indication field is associated with k2, an SLIV, a mapping type, and a scheduling offset to k2. The base station may configure the time domain resource assignment table for the terminal by using an RRC configuration, and subsequently, in DCI, a specific configuration in the table may be selected by indicating an index value. For example, the base station may configure the time domain resource assignment table by using an information element PUSCH-TimeDomainResourceAllocation in the RRC signaling. The information element PUSCH-TimeDomainResourceAllocation is defined as follows:

```
PUSCH-TimeDomainResourceAllocation ::=        SEQUENCE {

            k2                                     INTEGER(0..32)

OPTIONAL,      -- Need S

            mappingType                            ENUMERATED {typeA,

typeB},

            startSymbolAndLength                   INTEGER (0..127)

            scheduling offset to k2                INTEGER (0..32)

            }.
```

Based on the foregoing design, the plurality of CCs scheduled by using the first DCI may share the time domain resource assignment field, so that bit overheads of the first DCI are reduced, and coverage performance is improved.

k1 is a slot interval between receiving PDSCH data and feeding back a HARQ in a downlink, and a unit may be a time unit such as a slot. An example in which a slot is used as the unit. As shown in FIG. 10b, a PDCCH carrying DCI is received in a slot 0. When k0 indicated in a time domain resource assignment field in the DCI is equal to 4, a PDSCH is received in a slot 4. When information k1 carried in a PDSCH-to-HARQ feedback timing indicator field in the DCI is equal to 3, a HARQ feedback is sent in a slot 7. The HARQ feedback may be carried in a PUCCH, and the HARQ feedback may be specifically an acknowledgment (acknowledgment, ACK), a negative acknowledgment (negative acknowledgment, NACK), or the like.

In this embodiment of this application, when k1 carried in the PDSCH-to-HARQ feedback timing indicator field in the first DCI is configured to be shared by the plurality of CCs, k1 may indicate an offset value between a second reference location and a time unit corresponding to a HARQ, and the second reference location is determined based on a time unit corresponding to at least one of the plurality of CCs scheduled by using the first DCI. The method further includes: The UE determines, based on the second reference location and k1, a time unit corresponding to a HARQ in the plurality of CCs scheduled by using the first DCI. For example, the second reference location may be a time unit corresponding to the first PDSCH in time domain of the PDSCHs on the plurality of CCs scheduled by using the first DCI, or a time unit corresponding to the last PDSCH in time domain of the PDSCHs on the plurality of CCs scheduled by using the first DCI. Any one of the plurality of CCs is offset relative to the second reference location by k1 time units, and the UE sends the HARQ at a same location in the plurality of CCs.

In this embodiment of this application, it is set that the plurality of CCs scheduled by using the first DCI include the first CC and the second CC. In this case, the base station may send the first DCI on either of the two CCs. For example, it is set that the base station sends the first DCI on the first CC. In this case, the base station may further send second DCI on the first CC. The first DCI is DCI that supports multi-carrier co-scheduling. For example, the first DCI is single DCI. The second DCI is DCI that supports single-carrier scheduling. For example, the second DCI is single DCI or legacy DCI. The legacy DCI may be DCI 1_1, DCI 0_1, DCI 1_0, DCI 0_0, or the like.

When the SCS of the first CC is less than the SCS of the second CC, the first DCI and the second DCI are sent in a same time unit. Alternatively, when the SCS of the first CC is greater than the SCS of the second CC, sending is performed by using a time unit N as a periodicity.

The second DCI is sent in time units in intervals between different periodicities, and a value of N is determined based on the SCS of the first CC and the SCS of the second CC.

An example in which the first DCI is single DCI is used. When it is set that a maximum of one PDSCH/PUSCH on each carrier can be co-scheduled by using the single DCI, the UE needs to define a DCI processing capability.

For example, when two pieces of single DCI are used for scheduling, one piece of single DCI is used for scheduling a single carrier, and the other piece of single DCI is used for jointly scheduling two carriers. The DCI for jointly scheduling the two carriers is the foregoing first DCI, and the DCI for scheduling the single carrier is the foregoing second DCI. For example, as shown in FIG. 11, a CC 1 is referred to as a scheduling carrier, an SCS of the CC 1 is 15 kHz, a CC 2 is referred to as a scheduled carrier, and an SCS of the CC 2 is 30 kHz. The base station sends single DCI 1 and single DCI 2 on the CC 1, where PDSCHs 1 on the two CCs are co-scheduled by using the single DCI 1, and a PDSCH 2 on the CC 2 is scheduled by using the single DCI 2. In this case, the UE supports processing of the single DCI on the scheduling carrier. Optionally, a capability of the UE to process a total quantity N of DCI on the scheduling carrier (namely, the CC 1) is related to an SCS. For example, if {scheduling carrier, scheduled carrier} corresponds to a combination of { 15 kHz, 30 kHz} or {30 kHz, 60 kHz}, a value of N is 2. If {scheduling carrier, scheduled carrier} corresponds to a combination of { 15 kHz, 60 kHz}, a value of N is 4. Optionally, one PDSCH can be scheduled by using one piece of single DCI on the scheduling carrier. In other words, the single DCI 2 schedules one PDSCH on the single carrier.

Alternatively, when scheduling is performed by using one piece of single DCI and one piece of legacy DCI, two carriers are co-scheduled by using the single DCI, and one carrier is scheduled by using the legacy DCI. The single DCI is the foregoing first DCI, and the legacy DCI is the foregoing second DCI.

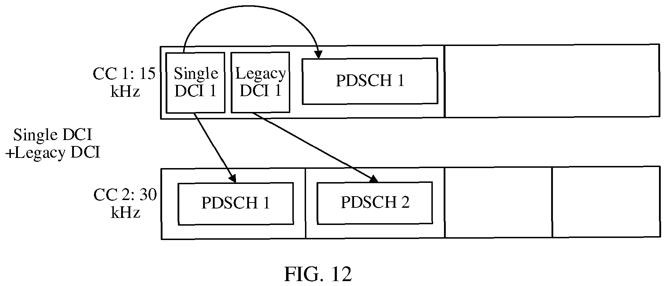

As shown in FIG. 12, a CC 1 is referred to as a scheduling carrier, and a CC 2 is referred to as a scheduled carrier. A PDSCH 1 on the CC 1 and a PDSCH 1 on the CC 2 are scheduled by using single DCI 1 sent on the CC 1, and a PDSCH 2 on the CC 2 is scheduled by using legacy DCI sent on the CC 1. In this case, the UE supports processing of two types of DCI on the scheduling carrier: the single DCI and the legacy DCI. Optionally, a capability of the UE to process a total quantity N of DCI on the scheduling carrier (namely, the CC 1) is related to an SCS. For example, if {scheduling carrier, scheduled carrier} corresponds to a combination of { 15 kHz, 30 kHz} or {30 kHz, 60 kHz}, a value of N is 2. If {scheduling carrier, scheduled carrier} corresponds to a combination of { 15 kHz, 60 kHz}, a value of N is 4.

Alternatively, when scheduling is performed by using one piece of single DCI and one piece of legacy DCI, two carriers are co-scheduled by using the single DCI, and one carrier is scheduled by using the legacy DCI. The single DCI is the foregoing first DCI, and the legacy DCI is the foregoing second DCI.

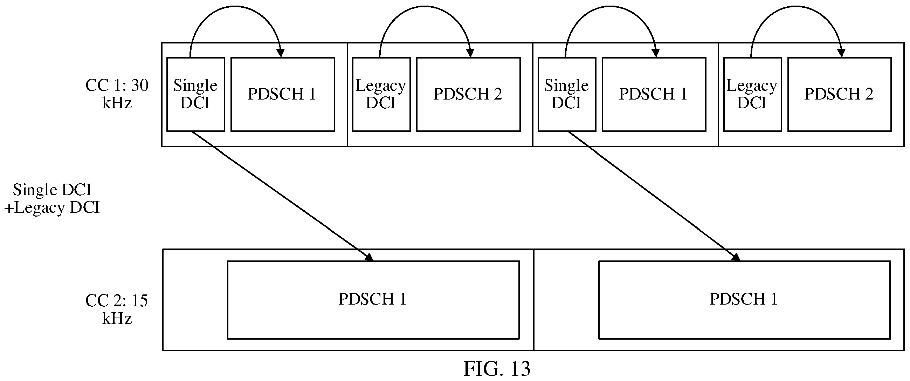

As shown in FIG. 13, a CC 1 is referred to as a scheduling carrier, an SCS corresponding to the CC 1 is 30 kHz, a CC 2 is referred to as a scheduled carrier, and an SCS corresponding to the CC 2 is 15 kHz. The base station sends single DCI on the CC 1, where a PDSCH 1 on the CC 1 and a PDSCH 1 on the CC 2 are scheduled by using the single DCI. The base station sends legacy DCI on the CC 1, where a PDSCH 2 on the CC 1 is scheduled by using the legacy DCI. Optionally, the UE processes one piece of single DCI every N slots on the scheduling carrier, and only processing of the legacy DCI is supported in remaining slots. A periodicity of the single DCI may be referred to as N slots, and processing of the legacy DCI is supported in slots between different periodicities of the single DCI. Optionally, a value of N may be related to an SCS configuration. For example, if {scheduling carrier, scheduled carrier} corresponds to a combination of {30 kHz, 15 kHz} or {60 kHz, 30 kHz}, the value of N is 2. If {scheduling carrier, scheduled carrier} corresponds to a combination of {60 kHz, 15 kHz}, the value of N is 4.

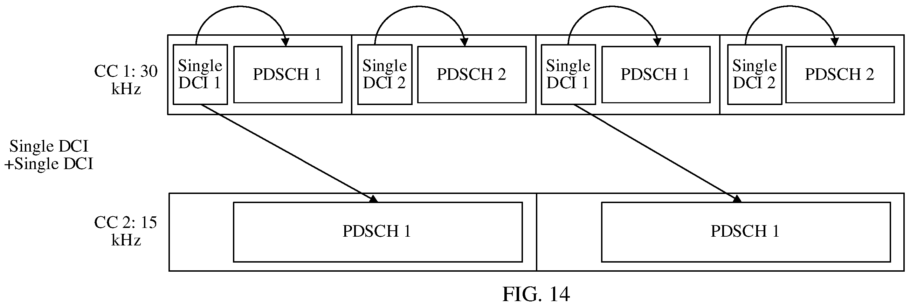

Alternatively, scheduling may be performed by using single DCI. However, in this case, only one PDSCH is scheduled by using single DCI in another slot. As shown in FIG. 14, a CC 1 is referred to as a scheduling carrier, an SCS corresponding to the CC 1 is 30 kHz, a CC 2 is referred to as a scheduled carrier, and an SCS corresponding to the CC 2 is 15 kHz. The base station sends single DCI 1 on the CC 1, where a PDSCH 1 on the CC 1 and a PDSCH 1 on the CC 2 are separately scheduled by using the single DCI 1. The base station sends single DCI 2 on the CC 1, where a PDSCH 2 on the CC 1 is scheduled by using the single DCI 2. In this case, the single DCI 1 is the foregoing first DCI, and the single DCI 2 is the foregoing second DCI. Optionally, the UE supports processing of N pieces of single DCI every N slots on the scheduling carrier. A value of N is mainly related to an SCS configuration. For example, if {scheduling carrier, scheduled carrier} corresponds to a combination of {30 kHz, 15 kHz} or {60 kHz, 30 kHz}, the value of N is 2. If {scheduling carrier, scheduled carrier} corresponds to a combination of {60 kHz, 15 kHz}, the value of N is 4. Optionally, in the N pieces of single DCI, N-1 pieces of single DCI support only a function of single-carrier scheduling.

In this embodiment of this application, the foregoing mainly defines a capability of the UE to process DCI on a scheduling carrier or a scheduled carrier in different numerology configuration scenarios.

The following focuses on a problem of how to design each field in single DCI to further reduce a DCI payload when a plurality of PDSCHs/PUSCHs on each carrier or CC can be co-scheduled by using the single DCI.

For example, when a plurality of data transmissions are scheduled on one CC by using the first DCI, for example, when a plurality of PDSCHs or a plurality of PUSCHs are scheduled on one CC, the plurality of scheduled PDSCHs or PUSCHs may share some field information, to further reduce a payload size of the first DCI. For example, information carried in any one of the following fields included in the first DCI may be shared by the plurality of data transmissions of the CC: frequency domain resource assignment, an MCS of a TB, a new data indicator of a TB, or an RV of a TB. Optionally, the TB may include a TB 1, a TB 2, and/or the like. Optionally, when a plurality of data transmissions are scheduled on one CC by using the first DCI, the information k0 indicated by the time domain resource assignment field may be a group of offset values k0, and the group of offset values k0 include a plurality of offset values k0. The group of offset values k0 are shared by the plurality of CCs, and the plurality of offset values k0 included in the group of offset values k0 are independently configured for a plurality of data transmissions scheduled on one CC by using the single DCI. The following uses an example in which the first DCI is single DCI for description.

When multi-carrier scheduling is implemented in a manner in which a plurality of PDSCHs/PUSCHs are scheduled by using single DCI, a quantity of PDSCHs/PUSCHs that can all be scheduled on one carrier by using the single DCI is no longer limited, and PDSCHs/PUSCHs on all carriers are scheduled and indicated by using the single DCI. This design may cause a size of the single DCI to increase exponentially, and affect a transmission coverage area. In this embodiment of this application, a plurality of PDSCHs/PUSCHs on a same CC scheduled by using the single DCI may further share some fields, to further reduce size overheads of the DCI. For example, a CC 1 and a CC 2 are scheduled by using the single DCI. Some fields in the single DCI may be shared by the CC 1 and the CC 2, or corresponding information is independently configured for the two CCs. An MCS field in the single DCI is used as an example. If the two CCs share the MCS field, information A carried in the MCS field may be shared by the CC 1 and the CC 2. If information carried in the MCS field is independently configured for the two CCs, an MCS field may separately carry information B1 and B2, where B1 corresponds to an MCS configuration on the CC 1, and B2 corresponds to an MCS configuration on the CC 2. Further, if the base station schedules a plurality of PDSCHs/PUSCHs on the CC 1, theoretically, each PDSCH/PUSCH corresponds to one MCS configuration. In this application, based on the following analysis and design, it is considered that some fields in single DCI are designed to be shared by a plurality of CCs, to reduce size overheads of the single DCI. Specific analysis is as follows:

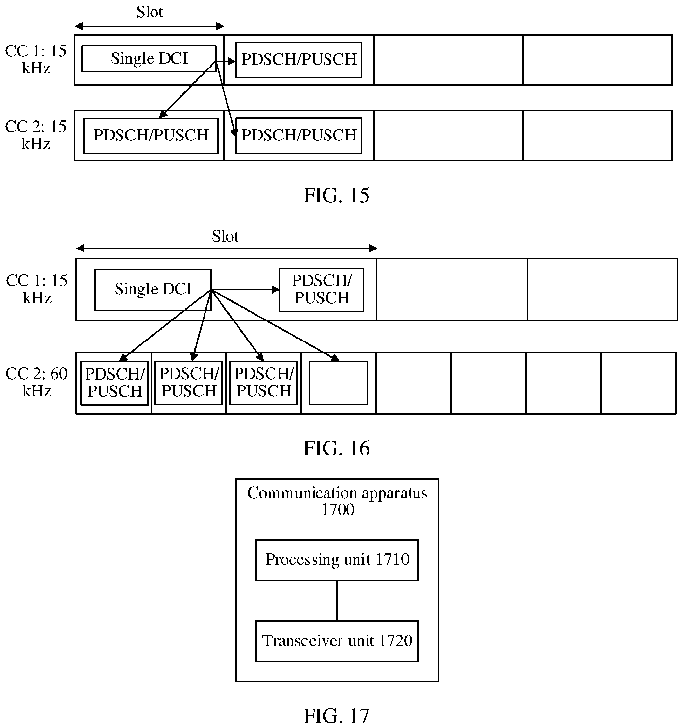

For example, as shown in FIG. 15, a CC 1 and a CC 2 are co-scheduled by using single DCI, a numerology of the CC 1 is the same as a numerology of the CC 2, and SCSs of the CC 1 and the CC 2 are both 15 kHz. In this case, in a same numerology configuration, sizes of slots in all carriers are the same, PDSCHs on different carriers are scheduled in a same transmission time interval (transmission time interval, TTI), a time domain resource assignment field in the DCI may be shared, and one TTI may be considered as one slot. In addition, HARQ information may be jointly fed back on two carriers, and DCI fields related to a PUCCH, for example, fields such as a PUCCH resource indicator, a HARQ timing indicator, and a TPC command, may also be shared. For example, a value of k1 refers to a time interval between a PDSCH and a PUCCH, and a time unit corresponding to the first PDSCH in a cell for joint scheduling, which is also referred to as a scheduling CC, may be used as a reference point, or a time unit corresponding to the last PDSCH in a cell for joint scheduling, which is also referred to as a scheduling CC, may be used as a reference point. An example in which the time unit is a slot is used. A slot for transmitting a HARQ may be determined based on the reference point by offsetting k1 slots in a direction in which a slot number increases. In addition, for a plurality of times of PDSCH transmission on a same carrier or CC, adjacent slots are usually related. Therefore, fields such as frequency domain resource assignment, an MCS, a new data indicator, and an RV may be shared.

Alternatively, in scenarios of different numerologies, for a manner of scheduling a plurality of PDSCHs/PUSCHs on a plurality of carriers or CCs, refer to FIG. 16. Due to different time lengths on different carriers, if a larger quantity of PDSCHs are co-scheduled in a same TTI by using single DCI, a corresponding DCI size also increases exponentially, and a coverage capability is affected. Therefore, a co-scheduling mode in which a plurality of PDSCHs are scheduled in a plurality of TTIs in scenarios of different numerologies needs to be limited. A specific design is as follows: If a quantity of to-be-transmitted PDSCHs/PUSCHs is greater than a quantity of carriers or CCs, there are the following several implementations for a time-frequency domain assignment status of a quantity of PDSCHs/PUSCHs to be sent by the base station on a carrier co-scheduled by using the single DCI:

A maximum quantity of PDSCHs/PUSCHs scheduled by using the single DCI is predefined. Alternatively, a maximum quantity of CCs that can be scheduled in frequency domain by using the single DCI is predefined, and a quantity of CCs that can all be scheduled in frequency domain is limited. Alternatively, a maximum quantity of slots that can be scheduled in time domain by using the single DCI is predefined, and a quantity of slots that can all be scheduled on one CC in time domain is limited.

For PDSCH/PUSCH transmission on different carriers or CCs, a time domain resource assignment field in a DCI field may be shared. A specific method for sharing a unified indication includes:

It is agreed that a value of k0 is subject to a CC of a large subcarrier spacing, and a value of k0 of a small subcarrier spacing may be obtained based on a subcarrier spacing multiple relationship. Refer to the foregoing formula 1. Alternatively, it is agreed that a value of k0 is subject to a CC of a small subcarrier spacing, a new third field is designed in the DCI to indicate an offset relative to a location of k0 of the small subcarrier spacing, and a newly added field for transmitting each PDSCH is independently indicated.

For PDSCH/PUSCH transmission at different slot locations on a same carrier or CC, adjacent slots are usually related. Therefore, fields such as frequency domain resource assignment, an MCS, new data indicator, and an RV in the single DCI may be shared. Specifically, a corresponding configuration state of each field in the single DCI may be shown in Table 7.

**Table 7 Configuration of each field value in single DCI**

| DCI field information | Quantity of bits | On different CCs | On a same CC |
|---|---|---|---|
| Identifier for DCI formats | 1 | Common | Common |
| Carrier indicator | 0 or 3 | Common | Common |
| BWP indicator | 0, 1, or 2 | Flexible | Flexible |
| Frequency domain resource assignment | 8 to 13 | Flexible | Common |
| Time domain resource assignment | 0, 1, 2, 3, or 4 | Flexible | Independent |
| VRB-to-PRB mapping | 0 or 1 | Flexible | Flexible |
| PRB bundling size indicator | 0, or 1 | Flexible | Flexible |

(continued)

| DCI field information | Quantity of bits | On different CCs | On a same CC |
|---|---|---|---|
| Rate matching indicator | 0, 1, or 2 | Flexible | Flexible |
| ZP CSI-RS trigger Trigger | 0, 1, or 2 | Flexible | Flexible |
| MCS [TB 1] | 5 | Independent | Common |
| New data indicator [TB 1] | 1 | Independent | Common |
| RV [TB 1] | 2 | Independent | Common |
| MCS [TB 2] | 5 | Independent | Common |
| New data indicator [TB 2] | 1 | Independent | Common |
| RV [TB 2] | 2 | Independent | Common |
| HARQ process number | 4 | Independent | Independent |
| Downlink assignment index | 0, 2, or 4 | Common | Common |
| TPC command for scheduled PUCCH | 2 | Common | Common |
| PUCCH resource indicator | 3 | Common | Common |
| PDSCH-to-HARQ feedback timing indicator | 0, 1, 2, or 3 | Common | Common |
| Antenna port and number of layers | 4, 5, or 6 | Flexible | Flexible |
| TCI | 0 or 3 | Common | Common |
| SRS request | 2 or 3 | Flexible | Flexible |
| CBG transmission information (CBGTI) | 0, 2, 4, 6, or 8 | Flexible | Flexible |
| CBG flushing out information (CBGFI) | 0 or 1 | Flexible | Flexible |
| DMRS sequence initialization | 1 | Flexible | Flexible |
| CRC | 24 | Common | Common |

It should be noted that in Table 7, "on different CCs" means that a field in the single DCI is common, flexible, or independent on different CCs. "On a same CC" means that for a field in the single DCI, a plurality of PDSCHs/PUSCHs scheduled on a same CC by using the single DCI are common, flexible, independent, or the like. For example, for an MCS field of a TB 1, the field is independently configured on different CCs, but is shared on a same CC. For example, PDSCH transmission on a CC 1 and a CC 2 is scheduled by using the single DCI. For the MCS field of the TB 1, the MSC field includes information A and information B, where the information A corresponds to the CC 1, and the information B corresponds to the CC 2. Further, if a plurality of PDSCHs are scheduled on the CC 2 by using the single DCI, the plurality of PDSCHs on the CC 2 share the information B.

In this design, scheduling of a plurality of PDSCHs/PUSCHs on a plurality of carriers or CCs is implemented by using the single DCI, and DCI fields are designed for sharing when a plurality of PDSCHs/PUSCHs are sent on a same carrier or CC and different carriers or CCs, so that payload overheads of the single DCI are reduced.

It may be understood that, to implement functions in the foregoing methods, the base station and the terminal include corresponding hardware structures and/or software modules for performing the functions. A person skilled in the art should be easily aware that, with reference with units and method steps in the examples described in this application, this application can be implemented by hardware or a combination of hardware and computer software. Whether a function is performed by hardware or hardware driven by computer software depends on particular application scenarios and design constraint conditions of the technical solutions.

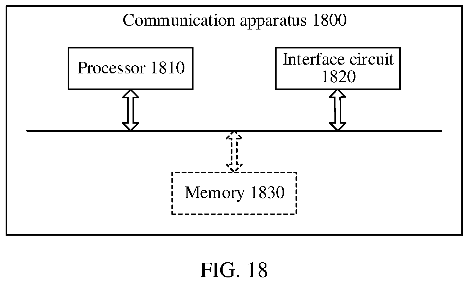

FIG. 17 and FIG. 18 are diagrams of structures of possible communication apparatuses according to this application. These communication apparatuses may be configured to implement functions of the terminal or the base station in the foregoing methods, and therefore can also implement beneficial effect of the foregoing methods. In this embodiment of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 17, a communication apparatus 1700 includes a processing unit 1710 and a transceiver unit 1720. The communication apparatus 1700 is configured to implement the functions of the base station in the foregoing method embodiments.

When the communication apparatus 1700 is configured to implement the functions of the base station in the foregoing method embodiments, the transceiver unit 1720 is configured to send first downlink control information DCI to a terminal. The first DCI is for scheduling transmission of a plurality of component carriers CCs, the first DCI includes a first field, and information carried in the first field is shared by the plurality of CCs. When information k0 carried in the first field is configured to be shared by the plurality of CCs, k0 indicates an offset value between a first reference location and a time unit corresponding to a physical downlink shared channel PDSCH, and the first reference location is determined based on a time unit corresponding to the first DCI. Optionally, the processing unit 1710 is configured to determine the first DCI.

When the communication apparatus 1700 is configured to implement the functions of the terminal in the foregoing method embodiments, the transceiver unit 1720 is configured to receive first downlink control information DCI from a network device. The first DCI is for scheduling transmission of a plurality of component carriers CCs, the first DCI includes a first field, and information carried in the first field is shared by the plurality of CCs. When information k0 carried in the first field is configured to be shared by the plurality of CCs, k0 indicates an offset value between a first reference location and a time unit corresponding to a physical downlink shared channel PDSCH, and the first reference location is determined based on a time unit corresponding to the first DCI. Optionally, the processing unit 1710 is configured to process the first DCI.

For more detailed descriptions about the processing unit 1710 and the transceiver unit 1720, directly refer to related descriptions in the foregoing method embodiments. Details are not described herein.

As shown in FIG. 18, a communication apparatus 1800 includes a processor 1810 and an interface circuit 1820. The processor 1810 and the interface circuit 1820 are coupled to each other. It may be understood that the interface circuit 1820 may be a transceiver or an input/output interface. Optionally, the communication apparatus 1800 may further include a memory 1830, configured to store instructions executed by the processor 1810, or input data required by the processor 1810 to run the instructions, or data generated after the processor 1810 runs the instructions.

When the communication apparatus 1800 is configured to implement the foregoing method, the processor 1810 is configured to implement the functions of the processing unit 1710, and the interface circuit 1820 is configured to implement the functions of the transceiver unit 1720.

When the communication apparatus is a module used in a base station, the module in the base station implements the functions of the base station in the foregoing method. The module in the base station receives information from another module (for example, a radio frequency module or an antenna) in the base station, where the information is sent by a terminal device to the base station; or the module in the base station sends information to another module (for example, a radio frequency module or an antenna) in the base station, where the information is sent by the base station to a terminal device. The module in the base station herein may be a baseband chip in the base station, or may be a DU or another module. The DU herein may be a DU in an open radio access network (open radio access network, O-RAN) architecture.

When the communication apparatus is a chip used in a terminal, the terminal chip implements a function of the terminal in the foregoing method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

It may be understood that the processor in this application may be a central processing unit (central processing unit, CPU), or may be another general-purpose processor, a digital signal processor (digital signal processor, DSP), or an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The memory in this application may be a random access memory, a flash memory, a read-only memory, a programmable read-only memory, an erasable programmable read-only memory, an electrically erasable programmable read-only memory, a register, a hard disk, a removable hard disk, a CD-ROM, or a storage medium of any other form well-known in the art.

For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal device. Certainly, the processor and the storage medium may alternatively exist in a base station or a terminal device as discrete components.

Methods in this application may be wholly or partially implemented by software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on the computer, the procedure or functions according to this application are completely or partially generated. The computer may be a general-purpose computer, a dedicated computer, a computer network, a network device, user equipment, a core network device, OAM, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects. "Including at least one of A, B, or C" may indicate: including A; including B; including C; including A and B; including A and C; including B and C; and including A, B, and C.

It may be understood that various numerals used in this application are merely differentiated for ease of description, but are not used to limit the scope of this application. Sequence numbers of the foregoing processes do not mean an execution sequence, and the execution sequence of the processes should be determined based on functions and internal logic of the processes.

**Claims**

1. A communication method, comprising:

   sending first downlink control information DCI to a terminal, wherein
   the first DCI is for scheduling physical downlink shared channels PDSCHs on a plurality of component carriers CCs, the first DCI comprises a first field, information carried in the first field is shared by the plurality of CCs, the first field indicates k0, k0 indicates an offset value between a first reference location and a time unit corresponding to a PDSCH on a first CC comprised in the plurality of CCs, and the first reference location is determined based on a time unit corresponding to the first DCI.

2. The method according to claim 1, wherein the first field further indicates a scheduling offset to k0, and the scheduling offset to k0 indicates an offset value between a time unit corresponding to a PDSCH on a CC other than the first CC in the plurality of CCs and the time unit corresponding to the PDSCH on the first CC.

3. The method according to claim 1 or 2, wherein the first DCI further comprises a second field, and information carried in the second field is independently configured for each of the plurality of CCs.

4. The method according to any one of claims 1 to 3, wherein the first DCI further comprises a third field, information carried in the third field is shared by a plurality of CCs comprised in one sub-group, and the plurality of CCs comprised in the sub-group belong to a part of the plurality of CCs scheduled by using the first DCI.

5. The method according to any one of claims 1 to 4, further comprising:

   determining, based on a configuration state of a field in the first DCI, corresponding information carried in the field in the first DCI, wherein
   the configuration state of the field in the first DCI comprises: common, sub-group common, flexible, and independent, and for one field in the first DCI,
   when a configuration state of the field is common, information carried in the field is shared by the plurality of CCs scheduled by using the first DCI; or
   when a configuration state of the field is sub-group common, information carried in the field is shared by a plurality of CCs comprised in one sub-group; or

when a configuration state of the field is flexible, information carried in the field is shared by the plurality of CCs scheduled by using the first DCI, or information carried in the field is shared by a plurality of CCs comprised in one sub-group of the plurality of CCs scheduled by using the first DCI, or information carried in the field comprises information independently configured for each CC scheduled by using the first DCI; or

when a configuration state of the field is independent, information carried in the field comprises information independently configured for each CC scheduled by using the first DCI.

6. The method according to claim 5, wherein a field whose configuration state is common comprises at least one of the following:
an identifier for DCI formats, a carrier indicator, a downlink assignment index, a transmission power control TPC command for scheduled physical uplink control channel PUCCH, a PUCCH resource indicator, a transmission configuration indicator TCI, or cyclic redundancy check CRC.

7. The method according to claim 5, wherein a field whose configuration state is sub-group common comprises at least one of the following:
frequency domain resource assignment, time domain resource assignment, a modulation and coding scheme MCS, a redundancy version RV, a TPC command for scheduled PUCCH, a TCI, a one-shot hybrid automatic repeat request HARQ-acknowledgment ACK request, a HARQ-ACK retransmission indicator, a priority indicator, or a channel access indicator.

8. The method according to any one of claims 1 to 7, wherein the first DCI further comprises a fourth field, information carried in the fourth field is shared by the plurality of CCs, the fourth field indicates k1, k1 indicates an offset value between a second reference location and a time unit corresponding to a HARQ, and the second reference location is determined based on a time unit corresponding to a PDSCH in at least one of the plurality of CCs.

9. The method according to any one of claims 1 to 8, wherein the plurality of CCs scheduled by using the first DCI comprise at least the first CC and a second CC, the first DCI is sent to the terminal on the first CC, and the method further comprises: sending second DCI to the terminal on the first CC, wherein
the first DCI is DCI that supports multi-carrier co-scheduling, and the second DCI is DCI that supports single-carrier scheduling.

10. The method according to claim 9, wherein when a subcarrier spacing SCS of the first CC is less than an SCS of the second CC, the first DCI and the second DCI are sent in a same time unit.

11. The method according to claim 9, wherein when an SCS of the first CC is greater than an SCS of the second CC, the first DCI is sent by using N time units as a periodicity, the second DCI is sent in time units between different periodicities of the first DCI, and a value of N is determined based on the SCS of the first CC and the SCS of the second CC.

12. The method according to any one of claims 1 to 11, wherein when a plurality of PDSCHs on one CC are scheduled by using the first DCI, information carried in any one of the following fields comprised in the first DCI is shared by the plurality of PDSCHs on the CC:

frequency domain resource assignment, an MCS of a transport block TB, a new data indicator of a TB, or an RV of a TB.

13. The method according to any one of claims 1 to 12, wherein when there are a group of offset values k0, the group of offset values k0 comprise a plurality of offset values k0, the group of offset values k0 are shared by the plurality of CCs scheduled by using the first DCI, and the plurality of offset values k0 comprised in the group of offset values k0 are independently configured on a plurality of PDSCHs on one CC scheduled by using the first DCI.

14. A communication method, comprising:

receiving first downlink control information DCI from a network device, wherein
the first DCI is for scheduling physical downlink shared channels PDSCHs on a plurality of component carriers CCs, the first DCI comprises a first field, information carried in the first field is shared by the plurality of CCs, the first field indicates k0, k0 indicates an offset value between a first reference location and a time unit corresponding to a PDSCH on a first CC comprised in the plurality of CCs, and the first reference location is determined based on a time unit corresponding to the first DCI.

15. The method according to claim 14, wherein the first field further indicates a scheduling offset to k0, and the scheduling offset to k0 indicates an offset value between a time unit corresponding to a PDSCH on a CC other than the first CC in the plurality of CCs and the time unit corresponding to the PDSCH on the first CC.

16. The method according to claim 14 or 15, wherein the first DCI further comprises a second field, and information carried in the second field is independently configured for each of the plurality of CCs.

17. The method according to any one of claims 14 to 16, wherein the first DCI further comprises a third field, information carried in the third field is shared by a plurality of CCs comprised in one sub-group, and the plurality of CCs comprised in the sub-group belong to a part of the plurality of CCs scheduled by using the first DCI.

18. The method according to any one of claims 14 to 17, wherein a configuration state of a field in the first DCI comprises: common, a sub-group common, flexible, and independent, and information carried in each field in the first DCI is determined based on a corresponding configuration state of the field in the first DCI.

19. The method according to claim 18, wherein a field whose configuration state is common comprises at least one of the following:
an identifier for DCI formats, a carrier indicator, a downlink assignment index, a transmission power control TPC command for scheduled physical uplink control channel PUCCH, a PUCCH resource indicator, a transmission configuration indicator TCI, or cyclic redundancy check CRC.

20. The method according to claim 18, wherein a field whose configuration state is sub-group common comprises at least one of the following:
frequency domain resource assignment, time domain resource assignment, a modulation and coding scheme MCS, a redundancy version RV, a TPC command for scheduled PUCCH, a TCI, a one-shot hybrid automatic repeat request HARQ-acknowledgment ACK request, a HARQ-ACK retransmission indicator, a priority indicator, or a channel access indicator.

21. The method according to any one of claims 14 to 20, wherein the plurality of CCs scheduled by using the first DCI comprise the first CC and a second CC, a subcarrier spacing SCS of the first CC is less than an SCS of the second CC, the first reference location is a time unit corresponding to the first DCI on the second CC, k0 indicates an offset value between the time unit corresponding to the first DCI on the second CC and the time unit corresponding to the PDSCH, and the method further comprises:
determining, based on the SCS of the first CC, the SCS of the second CC, and k0, an offset value between the time unit corresponding to the first DCI and the time unit corresponding to the PDSCH on the first CC.

22. The method according to claim 21, wherein the determining, based on the SCS of the first CC, the SCS of the second CC, and k0, an offset value between the time unit corresponding to the first DCI and the time unit corresponding to the PDSCH on the first CC satisfies the following condition:

$floor(k0/(2^{\mu_1-\mu_2}))$, wherein
floor represents a round-down operation, k0 represents the offset value between the time unit corresponding to the first DCI on the second CC and the time unit corresponding to the PDSCH, $\mu_1$ represents an index of the SCS corresponding to the second CC, and $\mu_2$ represents an index of the SCS corresponding to the first CC.

23. The method according to any one of claims 14 to 20, wherein the plurality of CCs scheduled by using the first DCI comprise the first CC and a second CC, an SCS of the first CC is less than an SCS of the second CC, the first reference location is an offset value between the time unit corresponding to the first DCI and the time unit corresponding to the PDSCH on the first CC, k0 indicates an offset value between the time unit corresponding to the first DCI and the time unit corresponding to the PDSCH on the first CC, and the method further comprises:

determining, based on the time unit corresponding to the PDSCH on the first CC, a time unit corresponding to a PDSCH on the second CC; or
receiving indication information from the network device, wherein the indication information indicates an offset value between a time unit corresponding to the first DCI on the second CC and the time unit corresponding to the PDSCH; or
determining, based on the third field in the first DCI, a time unit corresponding to a PDSCH on the second CC, wherein the third field indicates an offset value between the time unit corresponding to the PDSCH on the first CC and the time unit corresponding to the PDSCH on the second CC.

24. The method according to any one of claims 14 to 23, wherein the first DCI further comprises a fourth field, information carried in the fourth field is shared by the plurality of CCs, the fourth field indicates k1, k1 indicates an offset value between a second reference location and a time unit for transmitting a HARQ, the second reference location is determined based on a time unit corresponding to a PDSCH in one of the plurality of CCs, and the method further comprises:

    determining, based on the second reference location and k1, a time unit corresponding to a HARQ in the plurality of CCs of the first DCI.

25. The method according to any one of claims 14 to 24, wherein the plurality of CCs scheduled by using the first DCI comprise at least the first CC and the second CC, the first DCI is received from the network device on the first CC, and the method further comprises: receiving second DCI from the network device on the first CC, wherein

    the first DCI is DCI that supports multi-carrier co-scheduling, and the second DCI is DCI that supports single-carrier scheduling.

26. The method according to claim 25, wherein when the subcarrier spacing SCS of the first CC is less than the SCS of the second CC, the first DCI and the second DCI are received in a same time unit.

27. The method according to claim 25, wherein when the SCS of the first CC is greater than the SCS of the second CC, the first DCI is received by using N time units as a periodicity, the second DCI is received in time units between different periodicities of the first DCI, and a value of N is determined based on the SCS of the first CC and the SCS of the second CC.

28. The method according to any one of claims 14 to 27, wherein when a plurality of PDSCHs are scheduled on one CC by using the first DCI, information carried in any one of the following fields comprised in the first DCI is shared for a plurality of data transmissions on the CC:

    frequency domain resource assignment, a modulation and coding scheme MCS of a transport block TB, a new data indicator of a TB, or a redundancy version RV of a TB.

29. The method according to any one of claims 14 to 28, wherein when there are a group of offset values k0, the group of offset values k0 comprise a plurality of offset values k0, the group of offset values k0 are shared by the plurality of CCs scheduled by using the first DCI, and the plurality of offset values k0 comprised in the group of offset values k0 are independently configured on a plurality of data transmissions scheduled on one CC by using the first DCI.

30. A communication apparatus, comprising a unit configured to implement the method according to any one of claims 1 to 29.

31. A computer-readable storage medium, wherein the computer-readable storage medium stores a computer program or instructions, and when the computer program or the instructions are run on a computer, the computer is enabled to perform the method according to any one of claims 1 to 29.

32. A computer program product, wherein the computer program product comprises a computer program or instructions, and when the computer program or the instructions are run on a computer, the computer is enabled to perform the method according to any one of claims 1 to 29.

33. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 29 by using a logic circuit or by executing code instructions.

34. A chip system, comprising a processor or a circuit, configured to perform the method according to any one of claims 1 to 29.

FIG. 1

FIG. 2

FIG. 3

CC 1      Single DCI   ⟶   PDSCH 1

CC 2      PDSCH 2

FIG. 4

Base station        UE

501: First DCI, where the first DCI is for
scheduling transmission on a plurality of CCs

502: Receive PDSCHs or
send PUSCHs on the
plurality of CCs based on
scheduling of the first DCI

FIG. 5

k0=4

Slot 0             Slot 4

| PDCCH (DCI) | | | | PDSCH | | |

FIG. 6

Round-down floor(k0/($2^{\mu1-\mu2}$))=2

First CC
15 kHz

| Single DCI | | PDSCH |

Second CC
30 kHz

| | PDSCH | |

k0=4

FIG. 7

k0=2

Second CC
30 kHz

| Single DCI | | PDSCH | | | |

First CC
15 kHz

| | PDSCH | |

Round-down floor(k0/$2^{(\mu\_1-\mu\_2)}$)=1

k0=1

FIG. 8

k0=2

First CC
15 kHz

| Single DCI | | PDSCH |

Second CC
30 kHz

| | PDSCH | |

k0=4

FIG. 9

k0=0

k0=1

k0=3

■ PDCCH

▨ PDSCH

CC 1

CC 2

CC 3

**FIG. 10a**

k0=4

Slot 0

Slot 4

Slot 7

PDCCH (DCI)

PDSCH

HARQ

k1=3

**FIG. 10b**

CC 1: 15 kHz

Single DCI 1

Single DCI 2

PDSCH 1

Only single DCI

CC 2: 30 kHz

PDSCH 1

PDSCH 2

**FIG. 11**

CC 1: 15 kHz

| Single DCI 1 | Legacy DCI 1 | PDSCH 1 | |

Single DCI +Legacy DCI

CC 2: 30 kHz

| PDSCH 1 | PDSCH 2 | | |

FIG. 12

CC 1: 30 kHz

| Single DCI | PDSCH 1 | Legacy DCI | PDSCH 2 | Single DCI | PDSCH 1 | Legacy DCI | PDSCH 2 |

Single DCI
+Legacy DCI

CC 2: 15 kHz

| PDSCH 1 | PDSCH 1 |

FIG. 13

FIG. 14

Slot

CC 1: 15 kHz | Single DCI | PDSCH/PUSCH

CC 2: 15 kHz | PDSCH/PUSCH | PDSCH/PUSCH

FIG. 15

Slot

CC 1: 15 kHz | Single DCI | PDSCH/ PUSCH

CC 2: 60 kHz | PDSCH/ PUSCH | PDSCH/ PUSCH | PDSCH/ PUSCH

FIG. 16

Communication apparatus 1700

Processing unit 1710

Transceiver unit 1720

FIG. 17

Communication apparatus 1800

Processor 1810

Interface circuit 1820

Memory 1830

FIG. 18

## INTERNATIONAL SEARCH REPORT

| International application No. |
| --- |
| **PCT/CN2023/085053** |

| A. CLASSIFICATION OF SUBJECT MATTER |
| --- |
| H04W 72/12(2023.01)i |
| According to International Patent Classification (IPC) or to both national classification and IPC |

| B. FIELDS SEARCHED |
| --- |
| Minimum documentation searched (classification system followed by classification symbols) |
| IPC: H04W H04L |
| Documentation searched other than minimum documentation to the extent that such documents are included in the fields searched |
| Electronic data base consulted during the international search (name of data base and, where practicable, search terms used) |
| VEN, VCN, CNKI, 3GPP: 单, DCI, 多, 载波, 聚合, 小区, 共享, 公用, 子组, 字段, single DCI, MC-DCI, multi, cell, carrier, CC, PDSCH, common, group, sub-group, co-scheduled, field |

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114885431 A (HUAWEI TECHNOLOGIES CO., LTD.) 09 August 2022 (2022-08-09) claims 1-30, and description, paragraphs 77-152 | 1-34 |
| PX | MODERATOR (LENOVO). "R1-2205487, Feature Lead Summary #5 on Multi-Cell PUSCH/PDSCH Scheduling with a Single DCI" *3GPP TSG RAN WG1 Meeting #109-e*, 20 May 2022 (2022-05-20), pp. 104-119 | 1-34 |
| X | CN 113473635 A (INTEL CORP.) 01 October 2021 (2021-10-01) description, paragraphs 23-208 | 1-34 |
| A | WO 2021224965 A1 (NTT DOCOMO, INC.) 11 November 2021 (2021-11-11) entire document | 1-34 |
| A | INTERDIGITAL, INC. "R1-2105583, Enhancing PDSCH/PUSCH Scheduling for 52.6 GHz to 71 GHz Band" *3GPP TSG RAN WG1 #105-e*, 27 May 2021 (2021-05-27), entire document | 1-34 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **28 June 2023** | **03 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/085053**

| Patent document cited in search report | | | Publication date (day/month/year) | Patent family member(s) | | | Publication date (day/month/year) |
|---|---|---|---|---|---|---|---|
| CN | 114885431 | A | 09 August 2022 | None | | | |
| CN | 113473635 | A | 01 October 2021 | None | | | |
| WO | 2021224965 | A1 | 11 November 2021 | JPWO | 2021224965 | A1 | 11 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210342432

- CN 202210964130